(19) Europäisches Patentamt
European Patent Office
Office européen des brevets

(11) EP 1 757 977 B1

# (12) EUROPEAN PATENT SPECIFICATION

(45) Date of publication and mention of the grant of the patent:
**14.05.2008 Bulletin 2008/20**

(21) Application number: **06714974.0**

(22) Date of filing: **01.03.2006**

(51) Int Cl.:
***G02F 1/13363*** *(2006.01)* ***G02B 5/30*** *(2006.01)*
***G02F 1/1335*** *(2006.01)*

(86) International application number:
**PCT/JP2006/303856**

(87) International publication number:
**WO 2006/095617 (14.09.2006 Gazette 2006/37)**

## (54) LIQUID CRYSTAL PANEL, LIQUID CRYSTAL TELEVISION, AND LIQUID CRYSTAL DISPLAY DEVICE

FLÜSSIGKRISTALLPANEEL, FLÜSSIGKRISTALLFERNSEHEN UND FLÜSSIGKRISTALLANZEIGEVORRICHTUNG

PANNEAU À CRISTAUX LIQUIDES, TÉLÉVISION À CRISTAUX LIQUIDES, ET DISPOSITIF D AFFICHAGE À CRISTAUX LIQUIDES

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.03.2005 JP 2005068649**

(43) Date of publication of application:
**28.02.2007 Bulletin 2007/09**

(73) Proprietor: **NITTO DENKO CORPORATION**
**Ibaraki-shi, Osaka 567-8680 (JP)**

(72) Inventors:
- **YODA, Kenji**
  **baraki-shi, Osaka, 5678680 (JP)**
- **YANO, Shuuji**
  **baraki-shi, Osaka, 5678680 (JP)**
- **HAYASHI, Masaki**
  **baraki-shi, Osaka, 5678680 (JP)**

(74) Representative: **Schäfer, Matthias W.**
**Patentanwalt**
**Schwanseestrasse 43**
**81549 München (DE)**

(56) References cited:
**WO-A-01/20393** **JP-A- 2000 081 618**
**JP-A- 2004 157 523** **JP-A- 2005 062 671**
**JP-A- 2005 208 356** **US-A1- 2004 051 832**

- **JOUN-HO LEE 1 ET AL: "P-92:Optical Configurations of TW-IPS LC Cell for Very Wide Viewing Angle in Large Size TV Application" 2005 SID INTERNATIONAL SYMPOSIUM. BOSTON, MA, MAY 24 - 27, 2005, SID INTERNATIONAL SYMPOSIUM, SAN JOSE, CA : SID, US, 24 May 2005 (2005-05-24), pages 642-645, XP007012519**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 757 977 B1

## Description

### Technical Field

The present invention relates to a liquid crystal panel, to a liquid crystal television, and to a liquid crystal display apparatus each having improved display properties by incorporating laminated optical elements.

### Background art

A liquid crystal display apparatus has attracted attention for its properties such as being thin, being lightweight, and having low power consumption, and is widely used in: portable devices such as a cellular phone and a watch; office automation (OA) devices such as a personal computer monitor and a laptop personal computer; and home appliances such as a video camera and a liquid crystal television. The use of the liquid crystal display apparatus has spread because disadvantages in that its display properties vary depending on an angle from which a screen is viewed and that the liquid crystal display apparatus cannot operate at high temperatures and very low temperatures have been overcome by technical innovations. However, wide-ranging uses have changed the property required for each use. For example, a conventional liquid crystal display apparatus has only to have viewing angle property of a contrast ratiobetweenwhite/blackdisplays of about 10 in an oblique direction. This definition derives from a contrast ratio of black ink printed on white paper of newspapers, magazines, and the like. However, the use of the liquid crystal display apparatus for a large stationary color television requires a display that can be viewed well from different viewing angles because several persons view a screen at the same time. It is important for a liquid crystal display apparatus to suppress light leak in black display at any viewing angles, since such light leak causes substantial reduction of a contrast ratio. Also, since coloring in black display deteriorates sharpness of color display, it is important to produce pure black as background color. Further, a person viewing four corners of a screen of a large display without moving is comparable to a person viewing the screen from different viewing angle directions. Thus, it is important that the liquid crystal panel have uniform contrast or display without color unevenness across the entire screen. If such technical requirements are not satisfied in use for a large stationary color television, a viewer may feel uncomfortable and tired.

Various retardation films are conventionally used for a liquid crystal display apparatus. For example, there is disclosed a method of improving color shift in an oblique direction by arranging a positive A plate and a positive C plate on one side or both sides of a liquid crystal cell of in-plane switching (IPS) mode (see Patent Document 1, for example). However, a liquid crystal display apparatus according to such techniques has significantly reduced contrast ratio in an oblique direction. As a result, display properties of the thus-obtained liquid crystal display apparatus do not satisfy the requirements for a large stationary television.

Patent Document 1: JP-A-11-133408

WO 01/20393 A1 describes an optical compensator für liquid crystal displays comprising one 0 plate retarder, one planar A plate retarder, one negative C plate retarder. This document also relates to a liquid crystal display comprising such a compensator. WO 01/20393 A1 is aimed on improving optical properties of liquid crystal displays, e.g. contrast at wide viewing angles, grey scale level stability, and suppression of grey scale inversion.

### Disclosure of the Invention

### Problems to be solved by the Invention

The present invention has been made in view of solving the above-mentioned problems, and an object of the present invention is therefore to provide a liquid crystal panel, a liquid television and a liquid crystal display apparatus each having significantly reduced light leak and coloring in black display, a high contrast ratio in an oblique direction and a small color shift in an oblique direction.

### Means for solving the Problems

The inventors of the present invention have conducted extensive studies in order to solve the above-mentioned problems and have found that a liquid crystal panel as described below can achieve the above-mentioned object, to thereby complete the invention.

A liquid crystal panel according to an embodiment of the present invention includes: a liquid crystal cell including a liquid crystal layer containing nematic liquid crystals in homogeneous alignment in the absence of an electric field; a first polarizer arranged on a viewer side of the liquid crystal cell; a first laminated optical element arranged between the liquid crystal cell and the first polarizer; a second polarizer arranged on a backlight side of the liquid crystal cell; and a second laminated optical element arranged between the liquid crystal cell and the second polarizer. The first laminated

optical element includes a first negative C plate, a first positive A plate, and a positive C plate arranged in the stated order from the vicinity of the first polarizer. The first positive A plate is arranged such that the slow axis of the first positive A plate is substantially perpendicular to the absorption axis of the first polarizer. The second laminated optical element includes a second negative C plate and a second positive A plate arranged in the stated order from the vicinity of the second polarizer. The second positive A plate is arranged such that the slow axis of the second positive A plate is substantially parallel to the alignment direction of the liquid crystal cell.

In one embodiment of the invention, the liquid crystal cell has an in-plane retardation value (Re [590]) of 250 nm to 480 nm at a measuring wavelength of 590 nm.

In another embodiment of the invention, the first negative C plate has a thickness direction retardation value (Rth[590]) of 30 nm to 200 nm at a measuring wavelength of 590 nm. In another embodiment of the invention, the first negative C plate includes a polymer film containing as a main component at least one thermoplastic resin selected from the group consisting of a cellulose-based resin, a polyamideimide-based resin, a polyetheretherketone-based resin, and a polyimide-based resin.

In still another embodiment of the invention, the first positive A plate has an in-plane retardation value (Re [590]) of 50 nm to 200 nm at a measuring wavelength of 590 nm.

In still another embodiment of the invention, the first positiveAplate includes a stretched film of a polymer film containing a cycloolefin-based resin.

In still another embodiment of the invention, the positive C plate has a thickness direction retardation value (Rth[590]) of -60 nm or less at a measuring wavelength of 590 nm.

In still another embodiment of the invention, the positive C plate includes a solidified layer or cured layer of a liquid crystal composition containing a calamitic liquid crystal compound in homeotropic alignment.

In still another embodiment of the invention, a sum of an in-plane retardation value (Re [590]) of the second positive A plate at a measuring wavelength of 590 nm and an in-plane retardation value (Re [590]) of the liquid crystal cell at a measuring wavelength of 590 nm is 500 nm to 650 nm.

In still another embodiment of the invention, a thickness direction retardation value (Rth[590]) of the second negative C plate at a measuring wavelength of 590 nm is substantially equal to a thickness direction retardation value (Rth[590]) of the first negative C plate at a measuring wavelength of 590 nm.

According to another aspect of the invention, a liquid crystal television is provided. The liquid crystal television includes the above-described liquid crystal panel. According to still another aspect of the invention, a liquid crystal display apparatus is provided. The liquid crystal display apparatus includes the above-described liquid crystal panel.

Effect of the Invention

The liquid crystal panel of the present invention includes specific optical elements arranged between polarizers and a liquid crystal cell in specific positional relationships. Thus, light leak in an oblique direction in black display of a liquid crystal display apparatus can be reduced, and a contrast ratio in an oblique direction can be significantly increased compared with that of a conventional liquid crystal panel. Further, with the liquid crystal panel of the present invention, coloring in an oblique direction can be reduced while light leak in an oblique direction in black display of a liquid crystal display apparatus is reduced, to thereby reduce a color shift in an oblique direction. The liquid crystal panel of the present invention can provide a liquid crystal display apparatus sufficiently satisfying a level required for large color television applications.

Brief Description of the Drawings

[Fig. **1**] A schematic sectional view of a liquid crystal panel according to a preferred embodiment of the present invention.

[Fig. **2**] A schematic perspective view of the liquid crystal panel of Fig. **1.**

[Fig. **3**] A schematic diagram showing a concept of a typical production process for a polarizer to be used in the present invention.

[Fig. **4**] Part **(a)** is a schematic diagram explaining a calamitic liquid crystal compound in planar alignment, and Part **(b)** is a schematic diagram explaining a discotic liquid crystal compound in columnar alignment.

[Fig. **5**] A schematic diagram explaining an overview of a method of producing a retardation film to be used for a positive C plate. [Fig. **6**] A schematic sectional view of a liquid crystal display apparatus according to a preferred embodiment of the present invention.

[Fig. **7**] A schematic perspective view of a liquid crystal panel of Comparative Example 1.

[Fig. **8**] A schematic perspective view of a liquid crystal panel of Comparative Example 2.

[Fig. **9**] A schematic perspective view of a liquid crystal panel of Comparative Example 3.
[Fig. **10**] A schematic perspective view of a liquid crystal panel of Comparative Example 4.

Description of Reference Numerals

| | |
|---|---|
| 10 | Liquid crystal cell |
| 11, 11' | Substrate |
| 12 | Liquid crystal layer |
| 20 | First polarizer |
| 30 | First laminated optical element |
| 31 | First negative C plate |
| 32 | First positive A plate |
| 33 | Positive C plate |
| 40 | Second polarizer |
| 50 | Second laminated optical element |
| 51 | Second negative C plate |
| 52 | Second positive A plate |
| 60, 60' | Protective layer |
| 70, 70' | Surface treated layer |
| 80 | Brightness enhancement film |
| 100 | Liquid crystal panel |
| 110 | Prism sheet |
| 120 | Light guide plate |
| 130 | Backlight |
| 200 | Liquid crystal display apparatus |
| 300 | Feed roller |
| 301 | Polymer film |
| 310 | Aqueous iodine solution bath |
| 311, 312, 321, 322, 331, 332 | Roll |
| 320 | Bath of aqueous solution containing boric acid and potassium iodide |
| 330 | Bath of aqueous solution containing potassium iodide |
| 340 | Drying means |
| 350 | Polarizer |
| 360 | Take-up part |
| 401 | Delivery part |
| 402 | Substrate |
| 403 | Guide roll |
| 404 | First coater part |
| 405 | First drying means |
| 406 | Substrate having an alignment film formed thereon |
| 407 | Second coater part |
| 408 | Second drying means |
| 410 | UV irradiation part |
| 411 | Temperature control means |
| 412 | UV lamp |
| 414 | Take-up part |

Best mode for carrying out the Invention

<A. Overview of liquid crystal panel>

Fig. **1** is a schematic sectional view of a liquid crystal panel according to a preferred embodiment of the present invention. Fig. **2** is a schematic perspective view of the liquid crystal panel. Note that ratios among length, width, and thickness of each member in Figs. **1** and **2** are different from those of an actual member for clarity. A liquid crystal panel **100** is provided with: a liquid crystal cell **10** including a liquid crystal layer containing nematic crystals in homogeneous alignment in the absence of an electric field; a first polarizer **20** arranged on a viewer side of the liquid crystal cell **10;** a

first laminated optical element **30** arranged between the liquid crystal cell **10** and the first polarizer **20;** a second polarizer **40** arranged on a backlight side of the liquid crystal cell **10**; and a second laminated optical element **50** arranged between the liquid crystal cell **10** and the second polarizer **40.** The first laminated optical element **30** includes a first negative C plate **31,** a first positive A plate **32,** and a positive C plate **33** arranged in the stated order from a vicinity of the first polarizer **20.** The first positive A plate **32** is arranged such that its slow axis is substantially perpendicular to an absorption axis of the first polarizer **20.** The second laminated optical element **50** includes a second negative C plate **51** and a second positive A plate **52** arranged in the stated order from a vicinity of the second polarizer **40.** The second positive A plate **52** is arranged such that its slow axis is substantially parallel to an alignment direction of the liquid crystal cell **10.**

In the liquid crystal panel **100** for practical use, any appropriate protective layers (not shown) may be arranged on outer sides of the first polarizer **20** and the second polarizer **40.** The liquid crystal panel of the present invention is not limited to the examples in the figures, and any structural member such as any appropriate film or adhesive layer (preferably having isotropic optical property) may be arranged between the structural members . Hereinafter, the structural members of the liquid crystal panel of the present invention will be described more specifically.

<B. Liquid crystal cell>

Referring to Fig. **1,** the liquid crystal cell **10** used in the liquid crystal panel of the present invention is provided with: a pair of substrates **11** and **11';** and a liquid crystal layer **12** as a display medium held between the substrates **11** and **11'**. One substrate (active matrix substrate) **11'** is provided with: a switching element (typically TFT, not shown) for controlling electrooptic properties of liquid crystals; a scanning line (not shown) for providing a gate signal to the switching element and a signal line (not shown) for providing a source signal thereto; and a pixel electrode and a counter electrode (either not shown). The other substrate (color filter substrate) **11** is provided with color filters and black matrix (either not shown). The color filters may be provided in the active matrix substrate **11'** as well. A distance (cell gap) between the substrates **11** and **11'** is controlled by a spacer (not shown). An alignment film (not shown) formed of, for example, polyimide is provided on a side of each of the substrates **11** and **11'** in contact with the liquid crystal layer **12.**

The liquid crystal layer **12** contains homogeneously aligned nematic liquid crystals in the absence of an electric field. The liquid crystal layer (eventually, the liquid crystal cell) generally exhibits a refractive index profile of nx > ny = nz (where, nx, ny, and nz respectively represent refractive indices in the slow axis direction, fast axis direction, and thickness direction of the liquid crystal layer). In the specification of the present invention, ny = nz includes not only a case where ny and nz are exactly equal, but also a case where ny and nz are substantially equal. Typical examples of drive mode using the liquid crystal layer exhibiting such refractive index profile include: in-plane switching (IPS) mode; and fringe field switching (FFS) mode.

In the IPS mode, homogeneously aligned nematic liquid crystals in the absence of an electric field respond in an electric field parallel to substrates (also referred to as a horizontal electric field) generated between a counter electrode and a pixel electrode each formed of metal, for example, by utilizing an electrically controlledbirefringence (ECB) effect. Tobe specific, as described in "Monthly Display July" (p.83 to p.88, published by Techno Times Co., Ltd., 1997) or "Ekisho vol. 2, No. 4" (p.303 to p.316, published by Japanese Liquid Crystal Society, 1998), normally black mode provides completely black display in the absence of an electric field by: adjusting a longitudinal axis of the liquid crystal molecules without application of an electric field, in a direction of an absorption axis of a polarizing plate from which light enters; and arranging polarizing plates above and below the liquid crystal cell to be perpendicular to each other. Under application of an electric field, liquid crystal molecules rotate while remaining parallel to substrates, to thereby obtain a transmittance in accordance with a rotation angle. The IPS mode includes super in-plane switching (S-IPS) mode and advanced super in-plane switching (AS-IPS) mode each employing a zigzag electrode. Examples of a commercially available liquid crystal display apparatus of IPS mode include: 20-inch wide liquid crystal television "Wooo" (trade name, manufactured by Hitachi, Ltd.); 19-inch liquid crystal display "ProLite E481S-1" (trade name, manufactured by Iiyama Corporation) ; and 17-inch TFT liquid crystal display "FlexScan L565" (trade name, manufactured by Eizo Nanao Corporation).

In the FFS mode, homogeneously aligned nematic liquid crystals in the absence of an electric field respond in an electric field parallel to substrates and a parabolic electric field both generated between a counter electrode and a pixel electrode each formed of transparent conductor, for example, by utilizing an electrically controlled birefringence effect. Such electric fields in the FFS mode are collectively referred to as a fringe electric field, which can be generated by setting a distance between the counter electrode and the pixel electrode each formed of transparent conductor narrower than a cell gap. To be specific, as described in "Society for Information Display (SID) 2001 Digest" (p.484 to p.487) or JP 2002-031812A, normally black mode provides completely black display in the absence of an electric field by: adjusting a longitudinal axis of the liquid crystal molecules without application of an electric field, in a direction of an absorption axis of a polarizing plate from which light enters; and arranging polarizing plates above and below the liquid crystal cell to be perpendicular to each other. Under application of an electric field, liquid crystal molecules rotate while remaining parallel to substrates, to thereby obtain a transmittance in accordance with a rotation angle. The FFS mode includes advanced fringe field switching (A-FFS) mode and ultra fringe field switching (U-FFS) mode each employing a

zigzag electrode. An example of a commercially available liquid crystal display apparatus of FFS mode includes Tablet PC "M1400" (trade name, manufactured by Motion Computing, Inc.).

The homogeneously aligned nematic liquid crystals are those obtained as a result of interaction between substrates subjected to alignment treatment and nematic liquid crystals, in which alignment vectors of the nematic liquid crystal molecules are parallel to a substrate plane and uniformly aligned. In the specification of the present invention, homogenous alignment includes a case where the alignment vectors are slightly inclined with respect to the substrate plane, that is, a case where the liquid crystal molecules are pretilted. In a case where the liquid crystal molecules are pretilted, a pretilt angle is preferably 10° or less for maintaining a large contrast ratio and obtaining favorable display properties.

Any appropriate nematic liquid crystals may be employed as the nematic liquid crystals depending on the purpose. For example, the nematic liquid crystals may have positive dielectric anisotropy or negative dielectric anisotropy. A specific example of the nematic liquid crystals having positive dielectric anisotropy includes "ZLI-4535" (trade name, available from Merck Ltd., Japan). A specific example of the nematic liquid crystals having negative dielectric anisotropy includes "ZLI-2806" (trade name, available from Merck Ltd., Japan). A difference between an ordinary index (no) and an extraordinary index (ne), that is, a birefringence ($\Delta n_{LC}$) can be appropriately selected in accordance with the response speed, transmittance, and the like of the liquid crystals. However, the birefringence is preferably 0.05 to 0.30, in general.

Any appropriate cell gap may be employed as the cell gap (distance between substrates) of the liquid crystal cell depending on the purpose. However, the cell gap is preferably 1 μm to 7 μm. A cell gap within the above range can reduce response time and provide favorable display properties.

An in-plane retardation value (Re [590]) of the liquid crystal cell measured by using light of a wavelength of 590 nm at 23°C is calculated from a product of a birefringence ($\Delta n_{LC}$) of nematic liquid crystals to be used for the liquid crystal cell and a cell gap (nm) . Re [590] of the liquid crystal cell is preferably 250 nm to 480 nm, more preferably 280 nm to 450 nm, particularly preferably 310 nm to 420 nm, and most preferably 320 nm to 400 nm. Re[590] within the above-mentioned ranges can provide high transmittance and high response speed.

<C. Polarizer>

In the specification of the present invention, the term "polarizer" refers to a film capable of converting natural light or polarized light into appropriate polarized light. Any appropriate polarizer may be employed as a polarizer used in the present invention. For example, a polarizer capable of converting natural light or polarized light into linearly polarized light is used. Preferably, assuming that incident light is divided into two perpendicular polarized light components, the polarizer has a function of allowing one polarized light component to pass therethrough and at least one function of absorbing, reflecting, and scattering another polarizer light component.

The polarizer may have any appropriate thickness. The thickness of the polarizer is typically 5 to 80 μm, preferably 10 to 50 μm, and more preferably 20 to 40 μm. A thickness of the polarizer within the above ranges can provide excellent optical properties and mechanical strength.

<C-1. Optical properties of polarizer>

A light transmittance (also referred to as single axis transmittance) of the polarizer is preferably 41% or more, and more preferably 43% or more measured by using light of a wavelength of 440 nm at 23°C. A theoretical upper limit of the single axis transmittance is 50%. A degree of polarization is preferably 99. 8% or more, and more preferably 99.9% or more. A theoretical upper limit of the degree of polarization is 100%. A single axis transmittance and a degree of polarization within the above ranges can further increase a contrast ratio in a normal line direction of a liquid crystal display apparatus employing the polarizer.

The single axis transmittance and the degree of polarization can be determined by using a spectrophotometer "DOT-3" (trade name, manufactured by Murakami Color Research Laboratory). The degree of polarization can be determined by: measuring a parallel light transmittance ($H_0$) and a perpendicular light transmittance ($H_{90}$) of the polarizer; and using the following equation. Degree of polarization (%) = $\{(H_0-H_{90}) / (H_0+H_{90})\}^{1/2} \times 100$. The parallel light transmittance ($H_0$) refers to a transmittance of a parallel laminate polarizer produced by piling two identical polarizers such that respective absorption axes are parallel to each other. The perpendicular light transmittance ($H_{90}$) refers to a transmittance of a perpendicular laminate polarizer produced by piling two identical polarizers such that respective absorption axes are perpendicular to each other. The light transmittance refers to a Y value obtained through color correction by a two-degree field of view (C source) in accordance with JIS Z8701-1982.

<C-2. Means for arranging polarizers>

Referring to Fig. **2,** any appropriate method may be employed as a method of arranging the first polarizer **20**

and the second polarizer **40** in accordance with the purpose. Preferably, the first polarizer **20** is provided with an adhesive layer (not shown) on a surface facing the liquid crystal cell **10** and is attached to a surface of the first negative C plate **31.** Preferably, the second polarizer **40** is provided with an adhesive layer (not shown) on a surface facing the liquid crystal cell **10** and is attached to a surface of the second negative C plate **51.** In this way, when the first polarizer 20 and the second polarizer **40** are incorporated into a liquid crystal display apparatus, shift of the absorption axes of the first and second polarizers and damages on the first and second polarizers and the first and second negative C plates due to abrasion therebetween can be prevented. Further, adverse effects of reflection or refraction at the interface between the polarizer and the negative C plate can be reduced, to thereby provide a high contrast ratio in a frontal or oblique direction. In the specification of the present invention, the term "adhesive layer" is not particularly limited as long as it is capable of bonding surfaces of adjacent optical elements or polarizers and integrating the adjacent optical elements or polarizers with adhesive strength and adhesive time causing no adverse effects in practical use. Specific examples of the adhesive layer include a glue layer and an anchor coat layer. The adhesive layer may have a multilayer structure in which an anchor coat layer is formed on a surface of an adherend and an adhesive layer is formed thereon.

The first polarizer **20** is preferably arranged such that its absorption axis is substantially perpendicular to an absorption axis of the opposing second polarizer **40.** In the specification of the present invention, the phrase "substantially perpendicular" includes a case where an angle formed by two directions (here, the angle between the absorption axis of the first polarizer **20** and the absorption axis of the second polarizer **40**) is 90° ± 2.0°, preferably 90° ± 1.0°, and more preferably 90° ± 0.5°. An angle greatly departing from the above ranges tends to cause reduction in a contrast ratio in a frontal or oblique direction of a liquid crystal display apparatus employing the first polarizer **20** and the second polarizer **40.**

A thickness of the adhesive layer may be appropriately determined in accordance with intended use, adhesive strength, and the like. The adhesive layer has a thickness of preferably 0.1 to 50 μm, more preferably 0.5 to 40 μm, and most preferably 1 to 30 um. The thickness within the above range does not cause floating or peeling of the adhered optical element or polarizer, and can provide adhesive strength and adhesive time causing no adverse effects in practical use.

As a material forming the adhesive layer, any appropriate adhesive or anchor coat agent may be employed in accordance with the type of the adherent or the purpose. Specific examples of the adhesive, classified in accordance with form, include a solvent adhesive, an emulsion adhesive, a pressure sensitive adhesive, a resoluble adhesive, a condensation polymerization adhesive, a solventless adhesive, a film adhesive and a hot-melt adhesive. Specific examples of the adhesive, classified in accordance with chemical structure, include a synthetic resin adhesive, a rubber-based adhesive and natural adhesive. In the present specification, the term "adhesive" also includes a viscoelastic substance exhibiting detective adhesive strength at ordinary temperature by applying pressure.

When a polymer film containing as a main component a polyvinyl alcohol-based resin is used as a polarizer, a material for forming the adhesive layer is preferably a water-soluble adhesive. More preferably, the water-soluble adhesive contains a polyvinyl alcohol-based resin as a main component. A specific example of the water-soluble adhesive includes "GOHSEFIMER Z 200" (trade name, available from Nippon Synthetic Chemical Industry Co., Ltd.) which is an adhesive containing as a main component modified polyvinyl alcohol having an acetoacetyl group. The water-soluble adhesive may further contain a crosslinking agent. Examples of the crosslinking agent include an amine compound (for example, trade name "Methaxylenediamine" available from Mitsubishi Gas Chemical Company, Inc.), an aldehyde compound (for example, trade name "Glyoxal" available from Nippon Synthetic Chemical Industry Co., Ltd.), a methylol compound (for example, trade name "Watersol" available from Dainippon Ink and Chemicals, Incorporated), an epoxy compound, an isocyanate compound and polyvalent metal salt.

<C-3. Optical film used for polarizer>

An optical film used for the polarize is not specifically limited. Examples of the optical film include: a stretched film of a polymer film containing as a main component a polyvinyl alcohol-based resin, which contains a dichromatic substance; an 0-type polarizer prepared by aligning in a specific direction a liquid crystal composition containing a dichromatic substance and a liquid crystal compound (as disclosed in US 5,523,863); and an E-type polarizer prepared by aligning lyotropic liquid crystals in a specific direction (as disclosed in US 6,049,428).

The polarizer is preferably formed of a stretched film of a polymer film containing as a main component a polyvinyl alcohol-based resin, which contains a dichromatic substance. Such film exhibits a high degree of polarization and therefore provides a liquid crystal display apparatus having a high contrast ratio in a normal line direction. The polymer film containing as a main component a polyvinyl alcohol-based resin is produced for example through a method described in [Example 1] of JP 2000-315144 A.

The polyvinyl alcohol-based resin may be prepared by: polymerizing a vinyl ester-based monomer to obtain a vinyl ester-based polymer; and saponifying the vinyl ester-based polymer to convert vinyl ester units into vinyl alcohol units. Examples of the vinyl ester-based monomer include vinyl formate, vinyl acetate, vinyl propionate, vinyl valerate,

vinyl laurate, vinyl stearate, vinylbenzoate, vinylpivalate, and vinylversatate. Of those, vinyl acetate is preferred.

The polyvinyl alcohol-based resin may have any appropriate average degree of polymerization. The average degree of polymerization is preferably 1,200 to 3, 600, more preferably 1, 600 to 3,200, and most preferably 1,800 to 3,000. The average degree of polymerization of the polyvinyl alcohol-based resin can be determined through a method in accordance with JIS K6726-1994.

A degree of saponification of the polyvinyl alcohol-based resin is preferably 90.0 mol% to 99.9 mol%, more preferably 95.0 mol% to 99.9 mol%, and most preferably 98.0 mol% to 99.9 mol% from the viewpoint of durability of the polarizer.

The degree of saponification refers to a ratio of units actually saponified into vinyl ester units to units which may be converted into vinyl ester units through saponification. The degree of saponification of the polyvinyl alcohol-based resin may be determined in accordance with JIS K6726-1994.

The polymer film containing as a main component a polyvinyl alcohol-based resin to be used in the present invention may preferably contain polyvalent alcohol as a plasticizer. Examples of the polyvalent alcohol include ethylene glycol, glycerin, propylene glycol, diethylene glycol, triethylene glycol, tetraethylene glycol, and trimethylolpropane. The polyvalent alcohol may be used independently or in combination. In the present invention, ethylene glycol or glycerin is preferably used from the viewpoints of stretchability, transparency, thermal stability, and the like.

A use amount of the polyvalent alcohol in the present invention is preferably 1 to 30 parts by weight, more preferably 3 to 25 parts by weight, and most preferably 5 to 20 parts by weight with respect to 100 parts by weight of a total solid content in the polyvinyl alcohol-based resin. A use amount of the polyvalent alcohol within the above ranges can further enhance coloring property or stretchability.

The polymer film containing as a main component a polyvinyl alcohol-based resin may further contain surfactant. The use of surfactant can further enhance coloring property, stretchability or the like.

Any appropriate type of surfactant may be employed as the surfactant. Specific examples of the surfactant include anionic surfactant, cationic surfactant and nonionic surfactant. Nonionic surfactant is preferably used in the present invention. Specific examples of the nonionic surfactant include lauric diethanolamide, coconut oil fatty acid diethanolamide, coconut oil fatty acid monoethanolamide, lauric monoisopropanolamide, and oleic monoisopropanolamide. However, the surfactant is not limited thereto. In the present invention, lauric diethanolamide is preferably used.

A use amount of the surfactant is preferably more than 0 and 5 parts by weight or less, more preferably more than 0 and 3 parts by weight or less, and most preferably more than 0 and 1 part by weight or less with respect to 100 parts by weight of the polyvinyl alcohol-based resin. A use amount of the surfactant within the above ranges can further enhance coloring property or stretchability.

Any appropriate dichromatic substance may be employed as the dichromatic substance. Specific examples thereof include iodine and a dichromatic dye. In the specification of the present invention, the term "dichromatic" refers to optical anisotropy in which light absorption differs in two directions of an optical axis direction and a direction perpendicular thereto.

Examples of the dichromatic dye include Red BR, Red LR, Red R, Pink LB, Rubin BL, Bordeaux GS, Sky Blue LG, Lemon Yellow, Blue BR, Blue 2R, Navy RY, Green LG, Violet LB, Violet B, Black H, Black B, Black GSP, Yellow 3G, Yellow R, Orange LR, Orange 3R, Scarlet GL, Scarlet KGL, Congo Red, Brilliant Violet BK, Supra Blue G, Supra Blue GL, Supra Orange GL, Direct Sky Blue, Direct Fast Orange S, and Fast Black.

An example of a method of producing a polarizer will be described by referring to Fig. 3. Fig. 3 is a schematic diagram showing a concept of a typical production process of a polarizer used in the present invention. For example, a polymer film **301** containing as a main component a polyvinyl alcohol-based resin is fed from a feed roller **300,** immersed in an aqueous iodine solution bath **310,** and subjected to swelling and coloring treatment under tension in a longitudinal direction of the film by rollers **311** and **312** at different speed ratios. Next, the film is immersed in a bath **320** of an aqueous solution containing boric acid and potassium iodide, and subjected to crosslinking treatment under tension in a longitudinal direction of the film by rollers **321** and **322** at different speed ratios. The film subjected to crosslinking treatment is immersed in a bath **330** of an aqueous solution containing potassium iodide by rollers **331** and 332, and subjected to water washing treatment. The film subjected to water washing treatment is dried by drying means **340** to adjust its moisture content, and taken up in a take-up part **360.** The polymer film containing as a main component a polyvinyl alcohol-based resin may be stretched to a 5 to 7 times length of the original length through the above process, to thereby provide a polarizer **350.**

The polarizer may have any appropriate moisture content. More specifically, the moisture content is preferably 5% to 40%, more preferably 10% to 30%, and most preferably 20% to 30%.

<D. First laminated optical element>

Referring to Fig. **2,** the first laminated optical element **30** to be used in the present invention is arranged between the liquid crystal cell **10** and the first polarizer **20** arranged on a viewer side of the liquid crystal cell **10.** The first laminated

optical element **30** includes the first negative C plate **31,** the first positive A plate **32,** and the positive C plate **33** arranged in the stated order from the vicinity of the first polarizer **20.** The first positive A plate **32** is arranged such that its slow axis is substantially perpendicular to an absorption axis of the first polarizer **20.** The structural members of the first laminated optical element will be described more specifically in sections E, F, and G described below.

<E. First negative C plate>

In the specification of the present invention, the term "negative C plate" refers to a negative uniaxial optical element satisfying a refractive index profile of nx = ny > nz in which nx (slow axis direction) and ny (fast axis direction) represent in-plane main refractive indices and nz represents a refractive index in a thickness direction. Ideally, the negative uniaxial optical element satisfying a refractive index profile of nx = ny > nz has an optical axis in a normal line direction. In the specification of the present invention, nx = ny not only refers to a case where nx and ny are completely equal but also includes a case where nx and ny are substantially equal. The phrase "case where nx and ny are substantially equal" includes a case where an in-plane retardation value (Re [590]) determined by using light of a wavelength of 590 nm at 23°C is 10 nm or less, for example. Note that Re [590] of an optical element is described below.
Referring to Figs. **1** and **2,** the first negative C plate **31** is arranged between the first polarizer **20** and the first positive A plate **32.** According to this embodiment, the first negative C plate **31** also serves as a protective layer of a liquid crystal side of the first polarizer **20** such that a display screen may maintain uniformity for a long period of time even in the case where the polarizer is used in a liquid crystal display apparatus in a high temperature and high humidity environment, for example.
In the case where nx and ny are completely equal, the first negative C plate **31** has no in-plane retardation value and a slow axis is not detected. Thus, the first negative C plate may be arranged independently of an absorption axis of the first polarizer **20** and a slow axis of the first positive A plate **32.** In the case where nx and ny are substantially equal but slightly different, the slow axis may be detected. In this case, the first negative C plate **31** is preferably arranged such that its slow axis is substantially parallel or substantially perpendicular to the absorption axis of the first polarizer **20**. In the specification of the present invention, the phrase "substantially parallel" includes a case where an angle formed by two directions (here, the angle between the slow axis of the first negative C plate **31** and the absorption axis of the first polarizer **20**) is 0°±2.0°, preferably 0°±1.0°, and more preferably 0°±0.5°. The phrase "substantially perpendicular" is as described above. An angle greatly departing from the above ranges tends to provide a liquid crystal display apparatus having reduced contrast ratios in frontal and oblique directions.

<E-1. Optical properties of first negative C plate>

In the specification of the present invention, Re [590] refers to an in-plane retardation value determined by using light of a wavelength of 590 nm at 23°C. Re[590] can be determined from an equation Re [590] = (nx-ny) xd (where, nx and ny respectively represent refractive indices of an optical element (or retardation film) in a slow axis direction and a fast axis direction at a wavelength of 590 nm, and d (nm) represents a thickness of the optical element (or retardation film)). Note that, the slow axis refers to a direction providing a maximum in-plane refractive index.
The first negative C plate to be used in the present invention has Re[590] of 10 nm or less, preferably 5 nm or less, and most preferably 3 nm or less. Note that a theoretical lower limit of Re[590] of the negative C plate is 0 nm.
In the specification of the present invention, Rth [590] refers to a thickness direction retardation value determined by using light of a wavelength of 590 nm at 23°C. Rth[590] can be determined from an equation Rth[590] = (nx-nz)xd (where, nx and nz respectively represent refractive indices of an optical element (or retardation film) in a slow axis direction and a thickness direction at a wavelength of 590 nm, and d (nm) represents a thickness of the optical element (or retardation film)). Note that, the slow axis refers to a direction providing a maximum in-plane refractive index.
The first negative C plate to be used in the present invention has Rth[590] of 20 nm or more, preferably 30 nm to 200 nm, more preferably 30 nm to 120 nm, particularly preferably 40 nm to 110 nm, and most preferably 50 nm to 100 nm. The first negative C plate having Rth[590] within the above ranges provides a synergetic effect of exhibiting the functions of the respective optical elements, and allows increase in a contrast ratio in an oblique direction and reduction in a color shift in an oblique direction of a liquid crystal display apparatus.
Re[590] and Rth[590] may be determined by using "KOBRA21-ADH" (trade name, manufactured by Oji Scientific Instruments). Refractive indices nx, ny, and nz can be determined by: using an in-plane retardation value (Re) determined at a wavelength of 590 nm at 23°C, a retardation value (R40) determined by inclining a slow axis by 40° as a tilt angle, a thickness (d) of a retardation film, and an average refractive index (n0) of the retardation film; and using the following equations (i) to (iii) for computational numerical calculation. Then, Rth can be calculated from the following equation (iv). Here, $\phi$ and ny' are represented by the following respective equations (v) and (vi).

$$Re = (nx-ny) \times d \cdots (i)$$

$$R40 = (nx-ny') \times d/\cos(\Phi) \cdots (ii)$$

$$(nx+ny+nz)/3 = n0 \cdots (iii)$$

$$Rth = (nx-nz) \times d \cdots (iv)$$

$$\Phi = \sin^{-1}[\sin(40°)/n0] \cdots (v)$$

$$ny' = ny \times nz[ny^2 \times \sin^2(\Phi) + nz^2 \times \cos^2(\Phi)]^{1/2} \cdots (vi)$$

<E-2. Means for arranging first negative C plate>

Referring to Fig. **2,** any appropriate method may be employed as a method of arranging the first negative C plate **31** in accordance with the purpose. Preferably, the first negative C plate **31** is provided with an adhesive layer (not shown) on each side, to be attached to the first polarizer **20** and the first positive A plate **32.** In this way, gaps among the optical elements are filled with the adhesive layers, thereby being capable of preventing shift in relationships among optical axes of the respective optical elements, and of preventing damages on the optical elements due to abrasion of the respective optical elements upon incorporating into the liquid crystal display apparatus. Further, adverse effects of reflection or refraction that generates on the interface among the layers of the optical element can be reduced, to thereby allow increase in contrast ratios in frontal or oblique directions of a liquid crystal display apparatus.

A thickness of the adhesive layer may appropriately be determined in accordance with the intended use, adhesive strength, and the like. The thickness of the adhesive layer is preferably 0.1 μm to 50 μm, more preferably 0.5 μm to 40 μm, and most preferably 1 μm to 30 μm. A thickness of the adhesive layer within the above ranges prevents floating or peeling of optical elements or polarizers to be bonded and may provide adhesive strength and adhesive time causing no adverse effects in practical use.

Any appropriate material may be selected as a material used for forming the adhesive layer from the materials described in the above section C-2, for example. Preferred material is a pressure-sensitive adhesive (also referred to as an acrylic pressure-sensitive adhesive) containing an acrylic polymer as a base polymer from viewpoints of excellent optical transparency, appropriate wetness and adhesiveness, and excellent weatherability and heat resistance. A specific example of the acrylic pressure-sensitive adhesive is Non Support Double-faced Tape (trade name, "SK-2057", available from Soken Chemical & Engineering Co., Ltd.), which contains an acrylic pressure-sensitive adhesive as an adhesive layer.

<E-3. Structure of first negative C plate>

A structure (laminate structure) of the first negative C plate is not particularly limited as long as the optical properties as described in the above section E-1 are satisfied. To be specific, the first negative C plate may be a single retardation film, or a laminate of two or more retardation films. The first negative C plate is preferably a single retardation film for reducing shift or unevenness in retardation values due to shrinkage stress of the polarizer or heat of backlight and which may reduce the thickness of a liquid crystal panel. The first negative C plate as a laminate may include an adhesive layer (such as a glue layer or an anchor coat layer). In a case where the first negative C plate as a laminate includes two or more retardation films, the retardation films may be identical to or different from each other. Details of the retardation film will be described below in the section E-4.

Rth[590] of the retardation film to be used for the first negative C plate may appropriately be selected in accordance with the number of the retardation films to be used. In the case where the first negative C plate is formed of a single retardation film, for example, Rth[590] of the retardation film is preferably equal to Rth [590] of the first negative C plate. Thus, retardation values of adhesive layers to be used for laminating the first negative C plate to the first polarizer and the first positive A plate are preferably as small as possible. Further, in the case where the first negative C plate is a laminate including two or more retardation films, for example, the laminate is preferably designed such that total Rth [590] of the retardation films is equal to Rth[590] of the first negative C plate. To be specific, for production of a first negative C plate having Rth[590] of 60 nm by laminating two retardation films, the retardation films may each have Rth [590] of 30 nm. Alternatively, one retardation film may have Rth[590] of 10 nm, and the other retardation film may have Rth[590] of 50 nm. In lamination of two retardation films, the retardation films are preferably arranged such that the respective slow axes are perpendicular to each other, to thereby reduce Re [590] . Note that the first negative C plate formed of two or less retardation films was described for clarification, but the present invention may obviously be applied to a laminate including three or more retardation films.

A total thickness of the first negative C plate varies depending on the structure and is preferably 0. 1 μm to 200 μm, more preferably 0.5 μm to 150 μm, and most preferably 1 μm to 100 μm. A thickness within the above ranges can provide an optical element having excellent optical uniformity.

<E-4. Retardation film to be used for first negative C plate>

A retardation film to be used for the first negative C plate is not particularly limited. However, the retardation film to be preferably used has excellent transparency, mechanical strength, heat stability, water barrier property, and the like, and causes no optical unevenness due to distortion.

An absolute value of photoelastic coefficient (C [590] ($m^2/N$)) of the retardation film is preferably $1\times10^{-12}$ to $200\times10^{-12}$, more preferably $1\times10^{-12}$ to $80\times10^{-12}$, and most preferably $1\times10^{-12}$ to $30\times10^{-12}$. A smaller absolute value of photoelastic coefficient reduces shift or unevenness in retardation values due to shrinkage stress of the polarizers or heat of backlight of a liquid crystal display apparatus incorporating the retardation film, to thereby provide a liquid crystal display apparatus having excellent display uniformity.

The retardation film has a light transmittance of preferably 80% or more, more preferably 85% or more, and particularly preferably 90% or more measured by using light of a wavelength of 590 nm at 23°C. The first negative C plate preferably has a similar light transmittance. Note that a theoretical upper limit of the light transmittance is 100%.

<E-4-1. Retardation film (I) to be used for first negative C plate>

The first negative C plate to be used in the present invention preferably includes a polymer film containing as a main component a thermoplastic resin. The thermoplastic resin is more preferably a non-crystalline polymer. The non-crystalline polymer has an advantage of excellent transparency. The polymer film containing as a main component a thermoplastic resin may or may not be stretched.

Examples of the thermoplastic resin include: general purpose plastics such as a polyolefin resin, a cycloolefin-based resin, a polyvinyl chloride-based rein, a cellulose-based resin, a styrene-based resin, an acrylonitrile/butadiene/styrene-based resin, an acrylonitrile/styrene-based resin, polymethyl methacrylate, polyvinyl acetate, and a polyvinylidene chloride-based resin; general purpose engineering plastics such as a polyamide-based resin, a polyacetal-based resin, a polycarbonate-based resin, a modified polyphenylene ether-based resin, a polybutylene terephthalate-based resin, and a polyethylene terephthalate-based resin; and super engineering plastics such as a polyphenylene sulfide-based resin, a polysulfone-based resin, a polyether sulfone-based resin, a polyether ether ketone-based resin, a polyallylate-based resin, a liquid crystalline resin, a polyamideimide-based resin, a polyimide-based resin, and a polytetrafluoroethylene-based resin. The thermoplastic resin may be used alone or in combination. Further, the thermoplastic resin may be used after optionally undertaking appropriate polymer modification. Examples of the polymer modification include copolymerization, crosslinking, molecular-terminal modification, and stereoregularity modification.

The first negative C plate preferably includes a polymer film containing as a main component at least one thermoplastic resin selected from a cellulose-based resin,a polyamideimide-based resin, a polyether ether ketone-based resin, and a polyimide-based resin. In the case where such thermoplastic resin is formed into a sheet through a solvent casting method, for example, molecules align spontaneously during evaporation of a solvent. Thus, a retardation film satisfying a refractive index profile of nx = ny > nz can be obtained without requiring special fabrication such as stretching treatment. The polymer film containing as a main component a cellulose-based resin may be obtained through a method described in JP-A-2001-188128, for example. The polymer film containing as a main component a polyamideimide-based resin, a polyether ether ketone-based resin, or a polyimide-based resin may be obtained through a method described in JP-A-2003-287750.

The thermoplastic resin has a weight average molecular weight (Mw) of preferably 25,000 to 600,000, more

preferably 30,000 to 400,000, and particularly preferably 40,000 to 200,000 determined through gel permeation chromatography (GPC) by using a tetrahydrofuran solvent. A weight average molecular weight of a thermoplastic resin within the above ranges can provide a polymer film having excellent mechanical strength, solubility, forming property, and casting workability.

Any appropriate forming method may be employed as a method of obtaining the polymer film containing as a main component a thermoplastic resin. Specific examples of the forming method include compression molding, transfer molding, injection molding, extrusion, blow molding, powder molding, FRP molding, solvent casting, and the like. Of those, solvent casting is preferred because a highly smooth retardation film having favorable optical uniformity can be obtained. To be specific, the solvent casting involves: defoaming a rich solution (dope) prepared by dissolving in a solvent a resin composition containing a thermoplastic resin as a main component, a plasticizer, an additive, and the like; uniformly casting the defoamed solution into a sheet on a surface of an endless stainless steel belt or rotating drum; and evaporating the solvent to produce a film.

The conditions to be employed in formation of the polymer film containing as a main component a thermoplastic resin may appropriately be selected in accordance with the composition or type of the resin, a forming method, and the like. In a solvent casting method, examples of a solvent to be used include cyclopentanone, cyclohexanone, methyl isobutyl ketone, toluene, ethyl acetate, dichloromethane, and tetrahydrofuran. A method of drying the solvent preferably involves: using an air-circulating drying oven or the like; and drying while gradually increasing a temperature from a low temperature to a high temperature. A temperature range for drying of the solvent is preferably 50°C to 250°C, and more preferably 80°C to 150°C. The above-mentioned conditions are selected, to thereby provide a retardation film having small Re [590] and excellent smoothness and optical uniformity. Note that Rth[590] may appropriately be adjusted by selecting the composition or type of the resin, drying conditions, a thickness of the film after formation, and the like.

The polymer film containing as a main component a thermoplastic resin may further contain any appropriate additive. Specific examples of the additive include a plasticizer, a thermal stabilizer, a light stabilizer, a lubricant, an antioxidant, a UV absorber, a flame retardant, a colorant, an antistatic agent, a compatibilizing agent, a crosslinking agent, and a thickener. The type and amount of the additive to be used may be appropriately set depending on the purpose. For example, a use amount of the additive is preferably more than 0 and 20 parts by weight or less, more preferably more than 0 and 10 parts by weight or less, and most preferably more than 0 and 5 parts by weight or less with respect to 100 parts by weight of the thermoplastic resin.

A thickness of the polymer film containing as a main component a thermoplastic resin may appropriately be selected in accordance with the retardation values to be designed, the number of the film to be laminated, and the like. The thickness thereof is preferably 1 μm to 120 μm, and more preferably 3 μm to 100 μm. A thickness within the above ranges may provide a retardation film having excellent mechanical strength and optical uniformity and satisfying the optical properties described in the above section E-1.

The first negative C plate may include a stretched film of a polymer film containing a thermoplastic resin as a main component. In the specification of the present invention, the term "stretched film" refers to a plastic film having enhanced alignment of molecules in a specific direction obtained by: applying tension to an unstretched film at an appropriate temperature; or applying additional tension to a film stretched in advance. Any appropriate stretching method may be employed as a method of stretching a polymer film containing a thermoplastic resin as a main component. Specific examples of the stretching method include: a longitudinal uniaxial stretching method; a transverse uniaxial stretching method; a longitudinal and transverse simultaneous biaxial stretchingmethod; and a longitudinal and transverse sequential biaxial stretching method. Any appropriate stretching machine such as a roll stretching machine, a tenter stretching machine, or a biaxial stretching machine may be used as stretching means.

In heat-stretching, the temperature may be changed continuously or in steps. The stretching step may be divided into two or more steps, or stretching and shrinking or relaxation may be performed in combination. A stretching direction may be in a longitudinal direction (machine direction (MD) direction) of a film or in a width direction (transverse (TD) direction) of a film. For reduction in in-plane retardation value (Re[590]), the stretched film of a polymer film containing as a main component a thermoplastic resin is preferably stretched in two different directions (for example, an MD direction and a TD direction) which prevent an in-plane retardation from being generated. Re[590] and Rth[590] of the stretched film of a polymer film containing as a main component a thermoplastic resin may appropriately be adjusted by selecting the retardation values and thickness of the film before stretching, a stretching ratio, a stretching temperature, and the like. The above-mentioned stretching conditions may provide a retardation film not only satisfying the optical properties described in the above section E-1 but also having excellent optical uniformity.

A temperature (also referred to as stretching temperature) inside temperature control means during stretching of the polymer film containing as a main component a thermoplastic resin may appropriately be selected in accordance with the intended retardation values, the type or thickness of the polymer film to be used, and the like. The stretching is preferably performed in a range of Tg+1°C to Tg+30°C with respect to a glass transition point (Tg) of the polymer film because the retardation values easily even out and the film hardly crystallizes (becomes clouded) within the above-mentioned temperature range. To be more specific, the stretching temperature is preferably 100°C to 300°C, and more

preferably 120°C to 250°C. The glass transition temperature (Tg) may be determined through a DSC method in accordance with JIS K7121: 1987.

The stretching ratio during stretching of the polymer film containing as a main component a thermoplastic resin may appropriately be selected in accordance with the intended retardation values, the type or thickness of the polymer film to be used, and the like. The stretching ratio is generally more than 1 time and 3 times or less, preferably 1.1 times to 2 times, and more preferably 1.2 times to 1.8 times of the original length. A delivery speed during stretching is not particularly limited, but is preferably 1 m/minute to 20 m/minute in consideration of the machine accuracy, stability, and the like of the stretching machine. Re[590] and Rth[590] of the retardation film to be used for the first negative C plate may appropriately be adjusted by selecting the retardation values and thickness of the film before stretching, the stretching ratio, the stretching temperature, and the like. The above-mentioned stretching conditions may provide a retardation film not only satisfying the optical properties described in the above section E-1 but also having excellent optical uniformity.

A thickness of the stretched film of the polymer film containing as a main component a thermoplastic resin may appropriately be selected in accordance with the retardation values to be designed, the number of the film to be laminated, and the like. The thickness thereof is preferably 5 μm to 120 μm, and more preferably 10 μm to 100 μm. A thickness within the above ranges may provide a retardation film having excellent mechanical strength and optical uniformity and satisfying the optical properties described in the above section E-1.

In addition to the retardation films described above, a commercially available polymer film as it is may be used as the retardation film to be used for the first negative C plate. Further, a commercially available polymer film may be subjected to fabrication such as stretching treatment and/or relaxation treatment before use. Specific examples of a commercially available polymer film include: "Fujitac series" (UZ, TD, etc., trade name, available from Fuji Photo Film Co., Ltd.); "Arton series" (G, F, etc., trade name, available from JSR Corporation); "Zeonex 480" (trade name, available from Zeon Corporation); and "Zeonor" (trade name, available from Zeon Corporation).

<E-4-2. Retardation film (II) to be used for first negative C plate>

The first negative C plate may include a retardation film containing a liquid crystal composition. In the case where the liquid crystal composition is used, the first negative C plate preferably includes a solidified layer or cured layer of a liquid crystal composition containing a calamitic liquid crystal compound in planar alignment, or a solidified layer or cured layer of a liquid crystal composition containing a discotic liquid crystal compound in columnar alignment.

In the specification of the present invention, the term "planar alignment" refers to a state where a calamitic liquid crystal compound (rod-like liquid crystal molecules) is aligned such that a helical axis of liquid crystals is vertical to both substrate surfaces (see Fig. **4(a)**, for example) . The term "columnar alignment" refers to a state where a discotic liquid crystal compound is aligned so as to stack as a column (see Fig. **4(b)**, for example). Further, the term "solidified layer" refers to a layer which is prepared by cooling a softened or molten liquid crystal composition or a liquid crystal composition in a solution state into a solidified state. The term "cured layer" refers to a layer which is prepared by partly or entirely crosslinking the liquid crystal composition by heat, a catalyst, light, and/or radiation into a stable insoluble and non-melted state or a stable hardly soluble and hardly melted state. Note that the cured layer includes a cured layer prepared from a solidified layer of a liquid crystal composition.

In the specification of the present invention, the term "liquid crystal composition" refers to a composition having a liquid crystal phase and exhibiting liquid crystallinity. Examples of the liquid crystal phase include a nematic liquid crystal phase, a smectic liquid crystal phase, a cholesteric liquid crystal phase, and a columnar liquid crystal phase. The liquid crystal composition to be used in the present invention employs a liquid crystal composition having an appropriate liquid crystal phase in accordance with the purpose.

In the specification of the present invention, the term "liquid crystal compound" refers to a compound having a mesogen group (central core) in a molecular structure and forming a liquid crystal phase through temperature change such as heating or cooling or through an action of a solvent in a certain amount. The term "mesogen group" refers to a structural part required for forming a liquid crystal phase and generally includes a cyclic unit.

The term "calamitic liquid crystal compound" as used herein refers to a compound having a rod-like mesogen group in the molecular structure, and having a side chain bonded to the both sides or one side of the mesogen group through an ether bond or ester bond. Examples of the mesogen group include a biphenyl group, a phenylbenzoate group, a phenylcyclohexane group, an azoxybenzene group, an azomethine group, an azobenzene group, a phenylpyrimidine group, a diphenylacetylene group, a diphenylbenzoate group, a bicyclohexane group, a cyclohexylbenzene group, and a terphenyl group. Note that the terminals of each of those mesogen groups may have a substituent such as a cyano group, an alkyl group, an alkoxy group, or a halogen group, for example. Of those, a mesogen group having a biphenyl group or a phenylbenzoate group is preferably used for the calamitic liquid crystal compound.

In the specification of the present invention, the term "discotic liquid crystal compound" refers to a liquid crystal compound having a disc-like mesogen group in a molecular structure and having 2 to 8 side chains radially bonded to the mesogen group through an ether bond or an ester bond. The mesogen group has a structure described in Fig. 1 in

p. 22 of "Ekisho Jiten" (published byBaifukanCo., Ltd.), for example. Specific examples of themesogen group include benzene, triphenylene, truxene, pyran, rufigallol, porphyrin, and a metal complex.

The calamitic liquid crystal compound and the discotic liquid crystal compound may each include thermotropic liquid crystals exhibiting a liquid crystal phase in accordance with temperature change or lyotropic liquid crystals exhibiting a liquid crystal phase in accordance with a concentration of a solute in a solution. The thermotropic liquid crystals include enantiotropic liquid crystals in which a phase transition from a crystal phase (or glass state) to a liquid crystal phase is reversible, and monotropic liquid crystals in which a liquid crystal phase develops only during temperature decrease. The thermotropic liquid crystals are preferably used for the retardation film to be used for the first negative C plate because of excellent productivity, operability, quality, and the like in film formation.

The calamitic liquid crystal compound and the discotic liquid crystal compound may each be a polymer substance (also referred to as polymer liquid crystals) having a mesogen group on a main chain and/or a side chain, or a low molecular weight substance (also referred to as low molecular weight liquid crystals) having a mesogen group in a part of a molecular structure. The polymer liquid crystals in a liquid crystal state may be cooled to fix an alignment state of molecules, and thus have such a feature in that productivity in film formation is high and a formed film has excellent heat resistance, mechanical strength, and chemical resistance. The low molecular weight liquid crystals have excellent alignment property, and thus have such a feature in that a highly transparent film is easily obtained.

The calamitic liquid crystal compound and the discotic liquid crystal compound each preferably have at least one polymerizable functional group and/or a crosslinkable functional group in a part of a molecular structure. Such a liquid crystal compound may be used to polymerize or crosslink those functional groups through a polymerization reaction or a crosslinking reaction. Thus, mechanical strength of a retardation film increases, and a retardation film having excellent durability and dimensional stability may be obtained. Any appropriate functional group may be selected as the polymerizable functional group or the crosslinkable functional group, and preferred examples thereof include an acryloyl group, a methacryloyl group, an epoxy group, and a vinylether group.

The liquid crystal composition is not particularly limited as long as the composition contains a liquid crystal compound and exhibits liquid crystallinity. A content of the liquid crystal compound in the liquid crystal composition is preferably 40 parts by weight or more and less than 100 parts by weight, more preferably 50 parts by weight or more and less than 100 parts by weight, and most preferably 70 parts by weight or more and less than 100 parts by weight with respect to 100 parts by weight of a total solid content in the liquid crystal composition.

The liquid crystal composition may contain various additives such as a leveling agent, a polymerization initiator, an alignment assistant, an alignment agent, a chiral agent, a heat stabilizer, a lubricant, a plasticizer, and an antistatic agent within a range not compromising the object of the present invention. Further, the liquid crystal composition may contain any appropriate thermoplastic resin within a range not compromising the object of the present invention. A use amount of the additive is preferably more than 0 and 30 parts by weight or less, more preferably more than 0 and 20 parts by weight or less, and most preferably more than 0 and 15 parts by weight or less with respect to 100 parts by weight of the liquid crystal composition. A use amount of the additive within the above ranges may provide a retardation film having high uniformity.

The solidified layer or cured layer of the liquid crystal composition containing a calamitic liquid crystal compound in planar alignment may be obtained through a method described in JP-A-2003-287623. The solidified layer or cured layer of the liquid crystal composition containing a discotic liquid crystal compound in columnar alignment may be obtained through a method described in JP-A-09-117983.

A thickness of the solidified layer or cured layer of the liquid crystal composition containing a calamitic liquid crystal compound in planar alignment or the solidified layer or cured layer of the liquid crystal composition containing a discotic liquid crystal compound in columnar alignment is preferably 0.1 $\mu$m to 10 $\mu$m, and more preferably 0. 5 $\mu$m to 5 $\mu$m. A thickness of the solidified layer or cured layer within the above ranges may provide a thin retardation film having excellent optical uniformity and satisfying the optical properties described in the above section E-1.

<D. First positive A plate>

In the specification of the present invention, the term "positive A plate" refers to a positive uniaxial optical element satisfying a refractive index profile of nx > ny = nz. Ideally, the positive uniaxial optical element satisfying a refractive index profile of nx > ny = nz has an optical axis in a certain direction in the plane. Note that in the specification of the present invention, the expression "ny = nz" not only refers to a case where ny and nz are completely equal, but also includes a case where ny and nz are substantially equal. The phrase "case where ny and nz are substantially equal" includes a case where an absolute value of a difference (|Rth [590]-Re[590]|) between an in-plane retardation value (Re [590]) and a thickness direction retardation value (Rth[590]) is 10 nm or less, for example.

Referring to Figs. **1** and **2,** the first positive A plate **32** is arranged between the first negative C plate **31** and the positive C plate **33** such that a slow axis of the first positive A plate **32** is substantially perpendicular to the absorption axis of the first polarizer **20.** As an angle greatly departs from the above-mentioned ranges, contrast ratios tend to reduce

in frontal and oblique directions in a liquid crystal display apparatus employing the first positive A plate **32.**

<F-1. Optical properties of first positive A plate>

Re [590] of the first positive A plate to be used in the present invention is preferably 20 nm or more, more preferably 50 nm to 200 nm, furthermore preferably 60 nm to 180 nm, particularly preferably 70 nm to 170 nm, and most preferably 80 nm to 160 nm. Re[590] within the above ranges provides a synergetic effect of exhibiting the functions of the respective optical elements, and allows increase in a contrast ratio in an oblique direction and reduction in a color shift in an oblique direction of a liquid crystal display apparatus.

An absolute value (|Rth[590]-Re[590]|) of a difference between Re[590] and Rth[590] of the first positive A plate to be used in the present invention is preferably 10 nm or less, more preferably 5 nm or less, and most preferably 2 nm or less. Note that a theoretical lower limit of |Rth[590]-Re[590] I of the first positive A plate is 0 nm.

In general, the retardation values of the retardation film may vary depending on a wavelength. This phenomenon is referred to as wavelength dispersion property of the retardation film. In the specification of the present invention, the wavelength dispersion property may be determined by a ratio Re[480]/Re[590] of in-plane retardation values measured by using light of wavelengths of 480 nm and 590 nm at 23°C.

Re [480] /Re [590] of the first positive A plate is preferably more than 0.8 and less than 1.2, and more preferably more than 0.8 and less than 1.0. In the case where Re [480] /Re [590] is less than 1, the first positive A plate exhibits a property in which the retardation values are smaller with a shorter wavelength, and this phenomenon is referred to as "reverse wavelength dispersion property". A retardation film exhibiting reverse wavelength dispersion property has uniform retardation values in a wide visible light region. Thus, a liquid crystal display apparatus employing such a retardation film hardly causes light leak of a specific wavelength, and color shift in an oblique direction in black display of the liquid crystal display apparatus may be further improved.

<F-2. Means for arranging first positive A plate>

Referring to Fig. **2,** any appropriate method may be employed as a method of arranging the first positive A plate **32** between the first negative C plate **31** and the positive C plate **33.** Preferably, the first positive A plate **32** is provided with an adhesive layer (not shown) on each side and is attached to the first negative C plate **31** and the positive C plate **33.** In this way, gaps among the optical elements are filled with the adhesive layers, thereby being capable of preventing shift in relationships among optical axes of the respective optical elements, and of preventing damages on the optical elements due to abrasion of the respective optical elements upon incorporating into the liquid crystal display apparatus. In addition, adverse effects of reflection or refraction that generates on the interface among the respective optical elements can be reduced, to thereby allow increase in a contrast ratio in frontal and oblique directions of a liquid crystal display apparatus.

The thickness of the adhesive layer and the material used for forming the adhesive layer may appropriately be selected from the ranges and materials as those exemplified in the above section C-2 or as those described in the above section E-2.

<F-3. Structure of first positive A plate>

A structure (laminate structure) of the first positive A plate is not particularly limited as long as the optical properties as described in the above section F-1 are satisfied. The first positive A plate may be a single retardation film, or a laminate of two or more retardation films. The first positive A plate is preferably a single retardation film for reducing shift or unevenness in retardation values due to shrinkage stress of the polarizer or heat of backlight and which may reduce the thickness of a liquid crystal panel. The first positive A plate as a laminate may include an adhesive layer for attaching two or more retardation films. In a case where the first positive A plate as a laminate includes two or more retardation films, the retardation films may be identical to or different from each other. Details of the retardation film will be described below in the section F-4.

Re[590] of the retardation film to be used for the first positive A plate may appropriately be selected in accordance with the number of the retardation films to be used. In the case where the first positive A plate is formed of a single retardation film, for example, Re[590] of the retardation film is preferably equal to Re[590] of the first positive A plate. Thus, retardation values of adhesive layers to be used for laminating the first positive A plate to the first negative C plate and the positive C plate are preferably as small as possible. Further, in the case where the first positive A plate is a laminate including two or more retardation films, for example, the laminate is preferably designed such that total Re [590] of the retardation films is equal to Re[590] of the first positive A plate. To be specific, a first positive A plate having Re[590] of 100 nm can be obtained by laminating two retardation films each having Re [590] of 50 nm such that the respective slow axes are parallel to each other. Note that only the first positive A plate formed of two or less retardation

films was described for clarification, but the present invention may obviously be applied to a laminate including three or more retardation films.

A total thickness of the first positive A plate may vary depending on the structure and is preferably 0.1 μm to 200 μm, more preferably 0.5 μm to 150 μm, and most preferably 1 μm to 100 μm. A thickness within the above ranges can provide an optical element having excellent optical uniformity.

<F-4. Retardation film to be used for first positive A plate>

A retardation film to be used for the first positive A plate is not particularly limited. However, the retardation film which has excellent transparency, mechanical strength, heat stability, water barrier property, and the like, and causes no optical unevenness due to distortion is preferably used.

An absolute value of photoelastic coefficient (C [590] ($m^2/N$)) of the retardation film is preferably $1\times10^{-12}$ to $200\times10^{-12}$, more preferably $1\times10^{-12}$ to $50\times10^{-12}$, and most preferably $1\times10^{-12}$ to $10\times10^{-12}$. A smaller absolute value of photoelastic coefficient reduces shift or unevenness in retardation values due to shrinkage stress of the polarizers or heat of backlight when a liquid crystal display apparatus employs the retardation film, to thereby provide a liquid crystal display apparatus having excellent display uniformity.

The retardation film has a light transmittance of preferably 80% or more, more preferably 85% or more, and most preferably 90% or more measured by using light of a wavelength of 590 nm at 23°C. The first positive A plate preferably has a similar light transmittance. Note that a theoretical upper limit of the light transmittance is 100%.

<F-4-1. Retardation film (I) to be used for first positive A plate>

The first positive A plate preferably includes a stretched film of a polymer film containing as a main component a thermoplastic resin having a positive intrinsic birefringence value. In general, the term "intrinsic birefringence value" refers to a value of birefringence in ideal alignment in which a bonding chain (i.e., main chain) is fully extended (that is, a value of birefringence under ideal alignment conditions). In the specification of the present invention, the thermoplastic resin having a positive intrinsic birefringence value refers to a thermoplastic resin having a direction (i.e., a slow axis direction) in which an in-plane refractive index of a film becomes substantially parallel to a stretching direction, in stretching the polymer film containing as a main component a thermoplastic resin in one direction.

Examples of the thermoplastic resin having a positive intrinsic birefringence value include: general plastics such as a polyolefin resin, a cycloolefin-based resin, a polyvinyl chloride-based resin, a cellulose-based resin, and a polyvinylidene chloride-based resin; general engineering plastics such as a polyamide-based resin, a polyacetal-based resin, a polycarbonate-based resin, a modified polyphenylene ether-based resin, a polybutylene terephthalate-based resin, and a polyethylene terephthalate-based resin; and super engineering plastics such as a polyphenylene sulfide-based resin, a polysulfone-based resin, a polyether sulfone-based resin, a polyetheretherketone-based resin, a polyarylate-based resin, a liquid crystalline resin, a polyamideimide-based resin, a polyimide-based resin, and a polytetrafluoroethylene-based resin. The thermoplastic resin may be used alone or in combination. The thermoplastic resin may be subjected to any appropriate polymer modification before use. Examples of polymer modification include copolymerization, crosslinking, modification of molecular terminals, and modification of stereoregularity.

The first positive A plate preferably includes a stretched film of a polymer film containing as a main component a cycloolefin-based resin. The first positive A plate more preferably includes a stretched film of a polymer film containing as a main component a resin composition prepared by mixing a cycloolefin-based resin and a styrene-based resin. The first positive A plate most preferably includes a stretched film of a polymer film containing as a main component a resin composition prepared by mixing a cycloolefin-based resin obtained through hydrogenation of a ring-opened polymer of a norbornene-based monomer, and a styrene-based resin. Such a stretched film has a small photoelastic coefficient, extremely favorable wavelength dispersion property, and excellent durability, mechanical strength, and transparency.

Any appropriate cycloolefin-based resin may be selected. Specific examples thereof include: a cycloolefin-based resin prepared through hydrogenation of a ring-opened polymer of a norbornene-based monomer; an addition polymer of a norbornene-based monomer; and an addition polymer of a norbornene-based monomer and α-olfein. Of those, a cycloolefin-based resin prepared through hydrogenation of a ring-opened polymer of a norbornene-based monomer is preferred because such a resin has capability of strongly developing retardation value due to stretching. Note that in the specification of the present invention, the "cycloolefin-based resin prepared through hydrogenation of a ring-opened polymer of a norbornene-based monomer" is not limited to a cycloolefin-based resin prepared through hydrogenation of a ring-opened polymer of one kind of norbornene-based monomer, and may include: a cycloolefin-based resin prepared through hydrogenation of a ring-opened copolymer of two or more kinds of norbornene-based monomers; and a cycloolefin-based resin prepared through hydrogenation of a ring-opened copolymer of a norbornene-based monomer and another polymerizable monomer (such as cyclohexene).

The cycloolefin-based resin having a hydrogenated ring-opened polymer of a norbornene-based monomer

may be obtained by: performing a metathesis reaction of a norbornene-based monomer to obtain a ring-opened polymer; and hydrogenating the ring-opened polymer. For example, the resin may be produced through a method described in "Optical Polymer Zairyo No Kaihatsu/Ouyougijutsu", published byNTS Inc., p. 103 top. 111 (2003), or a method described in [Synthesis Example 1] in JP-A-2005-008698.

Examples of the norbornene-based monomer include: norbornene; norbornene alkyl derivatives such as 5-methyl-2-norbornene, 5-ethyl-2-norbornene, and 5-dimethyl-2-norbornene; a norbornene alkylidene derivative such as 5-ethylidene-2-norbornene; dicyclopentadiene derivatives such as dicyclopentadiene and 2,3-dihydrodicyclopentadinene; and octahydronaphthalene derivatives such as 1,4:5,8-dimethano-1,4,4a,5,6,7,8a-octahydronaphthalene and 6-methyl-1, 4:5,8-dimethano-1, 4, 4a, 5, 6, 7, 8a-octahydronaphthalen e.

The cycloolefin-based resin having a hydrogenated ring-opened polymer of a norbornene-based monomer has a hydrogenation rate of generally 90% or more, preferably 95% or more, and more preferably 99% or more from the viewpoints of heat resistance and light resistance.

The cycloolefin-based resin having a hydrogenated ring-opened polymer of a norbornene-based monomer has a weight average molecular weight (Mw) of preferably 20,000 to 300,000, and more preferably 30,000 to 200, 000, determined through gel permeation chromatography (GPC) by using a tetrahydrofuran solvent. A weight average molecular weight within the above ranges can provide a polymer film having excellent mechanical strength, solubility, forming property, and extrusion workability.

The styrene-based resin is used for adjusting the wavelength dispersion properties or photoelastic coefficient of the retardation film. In the specification of the present invention, the term "styrene-based resin" refers to a polymer obtained by polymerizing a styrene-based monomer. Examples of the styrene-based monomer include styrene, α-methylstyrene, o-methylstyrene, p-methylstyrene, p-chlorostyrene,p-nitrostyrene,p-aminostyrene, p-carboxystyrene, p-phenylstyrene, and 2,5-dichlorostyrene.

The styrene-based resin may be a copolymer obtained through a reaction of the styrene-basedmonomer and another monomer. Another monomer described above may be of one kind, or of two or more kinds. Specific examples of the copolymer include a styrene/maleimide copolymer, a styrene/maleic anhydride copolymer, and a styrene/methyl methacrylate copolymer. In a case where the styrene-based resin is a copolymer obtained through a reaction of the styrene-based monomer and another monomer, a content of the styrene-based monomer is preferably 50 mol% or more and less than 100 mol%, more preferably 60 mol% or more and less than 100 mol%, and most preferably 70 mol% or more and less than 100 mol%. The content of the styrene-based monomer within the above-mentioned ranges can provide a retardation film having a small photoelastic coefficient and excellent wavelength dispersion properties.

The styrene-based resin has a weight average molecular weight (Mw) of preferably 1,000 to 400,000, and more preferably 2,000 to 300,000, measured through a gel permeation chromatograph (GPC) method by using a tetrahydrofuran solvent. The styrene-based resin having a weight average molecular weight within the above-mentioned ranges has favorable solubility and forming property.

A use amount of the styrene-based resin is preferably 10 parts by weight to 50 parts by weight, and more preferably 20 parts by weight to 40 parts by weight with respect to 100 parts by weight of a solid content in the retardation film. A use amount within the above-mentioned ranges can provide a retardation film having a small photoelastic coefficient, favorable wavelength dispersion property, and excellent durability, mechanical strength, and transparency.

A method of obtaining the polymer film containing as a main component a thermoplastic resin to be used for the first positive A plate may be the same as the forming method described in the above section E-4-1. Among those, an extrusion is preferred because a retardation film having excellent smoothness and optical uniformity may be obtained. To be specific, the extrusion is a method involving: melting under heating a resin composition containing a thermoplastic resin having a positive intrinsic birefringence value as a main component, additives, and the like; extruding the resin composition into a sheet on a surface of a casting roll by using a T-die or the like; and cooling the resultant to form a film. In the case where two or more kinds of resins are blended and used, a method of mixing the resins is not particularly limited. In the case where the extrusion is employed, for example, the resins may be mixed in a predetermined ratio and melted for uniform mixing.

The conditions to be employed for formation of the polymer film containing as a main component a thermoplastic resin having a positive intrinsic birefringence value may appropriately be selected in accordance with the composition or type of the resin, a forming method, and the like. In the case where the extrusion is employed, a preferred method involves: discharging a resin melted under heating to 240°C to 300°C into a sheet; and gradually cooling the resultant from a high temperature to a low temperature by using a take-off roll (cooling drum) or the like. The above-mentioned conditions are selected, to thereby provide a retardation film having desirably small Re[590] and Rth[590] and excellent smoothness and optical uniformity.

The polymer film containing as a main component a thermoplastic resin having a positive intrinsic birefringence value may further contain any appropriate additive. Specific examples of the additive include a plasticizer, a heat stabilizer, a light stabilizer, a lubricant, an antioxidant, a UV absorber, a flame retardant, a colorant, an antistatic agent, a compatibilizing agent, a crosslinking agent, and a tackifier. The type and amount of the additive to be used may appropriately

be set in accordance with the purpose. For example, a use amount of the additive is preferably more than 0 and 10 parts by weight or less, more preferably more than 0 and 5 parts by weight or less, and most preferably more than 0 and 3 parts by weight or less with respect to 100 parts by weight of the thermoplastic resin.

Any appropriate stretching method may be employed as a method of stretching a polymer film containing as a main component a thermoplastic resin having a positive intrinsic birefringence value. Specific examples of the stretching method include: a longitudinal uniaxial stretching method; a transverse uniaxial stretching method; a longitudinal and transverse simultaneous biaxial stretching method; and a longitudinal and transverse sequential biaxial stretching method. Any appropriate stretching machine such as a roll stretching machine, a tenter stretching machine, or a biaxial stretching machine may be used as stretching means. In the heat stretching, temperature may be continuously changed or may be changed in steps. The stretching may be performed in two or more steps, or stretching and shrinking or relaxation may be performed in combination. A stretching direction may be in a longitudinal direction (machine direction (MD)) of a film or in a width direction (transverse direction (TD)) of the film. The stretching may be performed in an oblique direction (oblique stretching) through a stretching method described in Fig. 1 of JP-A-2003-262721. Re [590] and Rth[590] of the stretched polymer film containing as a main component a thermoplastic resin having a positive intrinsic birefringence value may appropriately be adjusted by selecting the retardation values and thickness of the film before stretching, the stretching ratio, the stretching temperature, and the like.

The polymer film before stretching preferably has as equal in-plane and thickness direction retardation values as possible. To be specific, the polymer film before stretching preferably has an absolute value of a difference (|Rth [590]-Re[590]|) between Re [590] and Re[590] of 5 nm or less. The polymer film before stretching more preferably has small equal in-plane and thickness direction retardation values. To be specific, Re [590] and Rth [590] of the polymer film before stretching are each 10 nm or less, more preferably 5 nm or less, and most preferably 2 nm or less. Re [590] and Rth[590] of the polymer film before stretching is preferably adjusted during film formation from the viewpoints of economical efficiency and operability. However, in the case where Re [590] and Rth[590] of the polymer film differ from each other after film formation, Re[590] and Rth [590] of the polymer film may be adjusted by subjecting the polymer film to fabrication such as stretching treatment, shrinking (or relaxation) treatment, or heat relaxation treatment.

A temperature inside a stretching oven (also referred to as stretching temperature) during stretching of the polymer film containing as a main component a thermoplastic resin having a positive intrinsic birefringence value is preferably equal to or higher than a glass transition temperature (Tg) of the polymer film because retardation values easily even out in a width direction and the film hardly crystallizes (becomes clouded). The stretching temperature is preferably Tg+1°C to Tg+30°C. The stretching temperature is typically 110 to 200°C, and more preferably 120 to 170°C. The glass transition temperature can be determined by differential scanning calorimetry (DSC) method in accordance with JIS K7121-1987.

A specific method of controlling the temperature inside the stretching oven is not particularly limited, and may appropriately be selected from heating methods or temperature control methods using: an air-circulating thermostatic oven in which hot air or cool air circulates; a heater using microwaves, far infrared rays, or the like; a heated roll for temperature adjustment; a heat pipe roll; and a metallic belt.

The stretching ratio during stretching of the polymer film containing as a main component a thermoplastic resin having a positive intrinsic birefringence value may appropriately be selected in accordance with the composition of the polymer film, the type of volatile components and the like, the residual amounts of the volatile components and the like, the retardation values to be designed, and the like. To be specific, the stretching ratio is generally more than 1 time to 3 times or less, preferably 1.1 times to 2 times, and more preferably 1.2 times to 1.8 times of the original length. A delivery speed during stretching is not particularly limited, but is preferably 1 m/minute to 20 m/minute in consideration of the machine accuracy, stability, and the like of the stretching machine.

A thickness of the stretched film of the polymer film containing as a main component a thermoplastic resin having a positive intrinsic birefringence value may appropriately be selected in accordance with the retardation values to be designed, the number of the film to be laminated, and the like. The thickness thereof is preferably 5 μm to 120 μm, and more preferably 10 μm to 100 μm. A thickness of the polymer film within the above-mentioned ranges can provide a retardation film having excellent mechanical strength and optical uniformity and satisfying the optical properties described in the above-mentioned section F-1.

As the retardation film to be used for the first positive A plate, a commercially available polymer film as it is may be used in addition to those described above. The commercially available polymer film may be subjected to secondary fabrication such as stretching treatment and/or relaxation treatment before use. Examples of the commercially available polymer film include: "Fujitac series (such as UZ and TD)", trade name, available from Fuji Photo Film, Co., Ltd.; "Arton series (such as G and F)", trade name, available from JSR Corporation; "Zeonex 480", trade name, available fromZeon Corporation; and"Zeonor", trade name, available from Zeon Corporation.

<F-4-2. Retardation film (II) to be used for first positive A plate>

The first positive A plate to be used in the present invention may include a retardation film containing a liquid crystal composition. In the case where the liquid crystal composition is used, the first positive A plate preferably includes a solidified layer or cured layer of a liquid crystal composition containing a calamitic liquid crystal compound in homogeneous alignment as the retardation film. The retardation film employing the liquid crystal composition may have desired retardation values with a very small thickness, to thereby contribute to a reduction in thickness of a liquid crystal panel.

In the specification of the present invention, the term "homogeneous alignment" refers to a state where the calamitic liquid crystal compound is aligned parallel to the plane of the film and in the same direction. The liquid crystal composition to be used for the first positive A plate may employ the composition described in the above-mentioned section E-4-2. The solidified layer or cured layer of a liquid crystal composition containing a calamitic liquid crystal compound in homogeneous alignment can be obtained by the method described in JP-A-2002-062427, for example.

A thickness of the solidified layer or cured layer of a liquid crystal composition containing a calamitic liquid crystal compound in homogeneous alignment is preferably 0.1 μm to 10 μm, and more preferably 0.5 μm to 5 μm. A thickness thereof within the above-mentioned ranges can provide a thin retardation film having excellent optical uniformity and satisfying the optical properties described in the above-mentioned section F-1.

<G. Positive C plate>

In the specification of the present invention, the term "positive C plate" refers to a positive uniaxial optical element satisfying a refractive index profile of nz > nx = ny. Ideally, the positive uniaxial optical element satisfying a refractive index profile of nz > nx = ny has an optical axis in a normal line direction. In the specification of the present invention, nx = ny not only refers to a case where nx and ny are completely equal but also includes a case where nx and ny are substantially equal. The phrase "case where nx and ny are substantially equal" includes a case where an in-plane retardation value (Re[590]) is 10 nm or less.

Referring to Figs. **1** and **2,** the positive C plate **33** is arranged between the first positive A plate **32** and the liquid crystal cell **10.** In the case where nx and ny are completely equal, the positive C plate **33** has no in-plane retardation value and a slow axis is not detected. Thus, the positive C plate may be arranged independently of an absorption axis of the first polarizer **20** and a slow axis of the first positive A plate **32.** In the case where nx and ny are substantially equal but slightly different, the slow axis may be detected. In this case, the positive C plate **33** is preferably arranged such that its slow axis is substantially parallel or substantially perpendicular to the absorption axis of the first polarizer **20.** An angle greatly departing from the above ranges tends to provide a liquid crystal display apparatus having reduced contrast ratios in frontal and oblique directions.

<G-1. Optical properties of positive C plate>

Re[590] of the positive C plate to be used in the present invention is preferably 5 nm or less, and more preferably 2 nm or less. Note that a theoretical lower limit for Re [590] of the positive C plate is 0 nm.

Rth [590] of the positive C plate is -20 nm or less, preferably -60 nm or less, more preferably -350 nm to -90 nm, furthermore preferably -260 nm to -90 nm, particularly preferably -240 nm to -90 nm, and most preferably -220 nm to -90 nm. Rth[590] within the above-mentioned ranges can provide a synergetic effect of exhibiting the functions of the respective optical elements, and allows increase of a contrast ratio in an oblique direction and reduction of a color shift in an oblique direction of a liquid crystal display apparatus.

In addition, Rth[590] of the positive C plate is preferably set such that a sum ($Rth[590]^{SUM}$) of Rth[590] of the first negative C plate described in the above-mentioned section E-1 and Rth[590] of the positive C plate falls within the range of -150 nm or more and less than 0 nm. The above-mentioned $Rth[590]^{SUM}$ is more preferably -140 nm to -30 nm, particularly preferably -130 nm to -50 nm, and most preferably -120 nm to -70 nm.

<G-2. Means for arranging positive C plate>

Referring to Fig. **2,** any appropriate method may be employed as a method of arranging the positive C plate **33** between the first positive A plate **32** and the liquid crystal cell **10.** Preferably, the positive C plate **33** is provided with an adhesive layer (not shown) on each side and is attached to the first positive A plate **32** and the liquid crystal cell **10.** In this way, gaps among the optical elements are filled with the adhesive layers, thereby being capable of preventing shift in relationships among optical axes of the respective optical elements, and of preventing damages on the optical elements due to abrasion of the respective optical elements upon incorporating into the liquid crystal display apparatus. In addition, adverse effects of reflection or refraction that generates on the interface among the respective optical elements can be reduced, to thereby allow increase in contrast ratios in frontal and oblique directions of a liquid crystal display

apparatus.

The thickness of the adhesive layer and the material used for forming the adhesive layer may appropriately be selected from those as described in the above section C-2 or the ranges and materials as described in the above section E-2.

<G-3. Structure of positive C plate>

A structure (laminate structure) of the positive C plate is not particularly limited as long as the optical properties as described in the above section G-1 are satisfied. The positive C plate may be a single retardation film, or a laminate of two or more retardation films. The positive C plate is preferably a single retardation film for reducing shift or unevenness in retardation values due to shrinkage stress of the polarizer or heat of backlight and which may reduce the thickness of a liquid crystal panel. The positive C plate as a laminate may include an adhesive layer for attaching two or more retardation films. In a case where the laminate includes two or more retardation films, the retardation films may be identical to or different from each other. Details of the retardation film will be described below in G-4.

Rth[590] of the retardation film to be used for the positive C plate may appropriately be selected in accordance with the number of the retardation films. In the case where the positive C plate is formed of a single retardation film, for example, Rth[590] of the retardation film is preferably equal to Rth[590] of the positive C plate. Thus, retardation values of adhesive layers to be used for laminating the positive C plate to the positive A plate and the liquid crystal cell are preferably as small as possible. Further, in the case where the positive C plate is a laminate including two or more retardation films, for example, the laminate is preferably designed such that total Rth[590] of the retardation films is equal to Rth[590] of the positive C plate . To be more specific, for example, a positive C plate having Rth[590] of -100 nm can be obtained by laminating two retardation films each having Rth[590] of -50 nm. Alternatively, such a positive C plate can be obtained by laminating a retardation film having Rth [590] of -20 nm and a retardation film having Rth [590] of -80 nm. In this case, the two retardation films are preferably laminated such that the respective slow axes are perpendicular to each other because the in-plane retardation value can be reduced. Note that only the positive C plate formed of two or less retardation films was described for clarification, but the present invention may obviously be applied to a laminate including three or more retardation films.

A total thickness of the positive C plate is preferably 0.6 μm to 200 μm, more preferably 0.8 μm to 150 μm, and most preferably 1 μm to 100 μm. A thickness within the above ranges can provide an optical element having excellent optical uniformity.

<G-4. Retardation film to be used for positive C plate>

The retardation film to be used for the positive C plate preferably has excellent transparency, mechanical strength, heat stability, water barrier property, and the like. Preferably, the retardation film to be used for the positive C plate is a solidified layer or cured layer of a liquid crystal composition containing a calamitic liquid crystal compound in homeotropic alignment as the retardation film. In the specification of the present invention, the term "homeotropic alignment" refers to a state where the calamitic liquid crystal compound in the liquid crystal composition is aligned uniformly and parallel to a normal line direction of the film. Note that the liquid crystal composition and the calamitic liquid crystal compound to be used for the positive C plate may be the same as those described in the above section E-4-2.

More preferably, the retardation film to be used for the positive C plate includes a solidified layer or cured layer of a liquid crystal composition containing a calamitic liquid crystal compound in homeotropic alignment, and the calamitic liquid crystal compound contains at least one polymerizable or crosslinkable functional group in a part of a molecular structure. Particularly preferably, the calamitic liquid crystal compound contains at least two polymerizable or crosslinkable functional groups in a part of a molecular structure. Such a liquid crystal compound may be used to polymerize (or crosslink) the polymerizable (or crosslinkable) functional groups through a polymerization (or crosslinking) reaction. Thus, mechanical strength of a retardation film increases, and a retardation film having excellent durability and dimensional stability may be obtained. Examples of low molecular weight liquid crystals having one mesogen group and two polymerizable functional groups in a part of a molecular structure include: "Paliocolor LC242", trade name, available from BASF Aktiengesellschaft (Δn = 0.131); and "CB483", trade name, available from Huntsman International LLC. (Δn = 0.080).

Any appropriate functional group may be selected as the polymerizable or crosslinkable functional group, and examples thereof include an acryloyl group, a methacryloyl group, an epoxy group, and a vinylether group. Of those, an acryloyl group and a methacryloyl group are preferably used from the viewpoint of being highly reactive and providing a retardation film having excellent transparency.

A thickness of the solidified layer or cured layer of a liquid crystal composition containing a calamitic liquid crystal compound in homeotropic alignment may vary depending on the retardation values to be designed, but is preferably 0.6 μm to 20 μm, more preferably 0.8 μm to 10 μm, and most preferably 1.0 μm to 5.0 μm. A thickness thereof within

the above ranges may provide a retardation film having excellent productivity or operability in film formation, sufficient mechanical strength for practical use, and excellent optical uniformity.

A difference (also referred to as a birefringence (Δn), Δn = ne-no) between a refractive index of extraordinary ray (ne) and a refractive index of ordinary ray (no) measured at a wavelength of 589 nm at 23°C of the solidified layer or cured layer of a liquid crystal composition containing a calamitic liquid crystal compound in homeotropic alignment is preferably 0.04 to 0.20, more preferably 0.05 to 0. 18, and most preferably 0.07 to 0. 14. A retardation film having a birefringence within the above ranges may be used, to thereby satisfy the optical properties described in the above section G-1 and adjust the thickness of the retardation film within the range proving excellent productivity and operability.

The solidified layer or cured layer of a liquid crystal composition containing a calamitic liquid crystal compound in homeotropic alignment has a light transmittance of preferably 80% or more, more preferably 85% or more, and particularly preferably 90% or more measured by using light of a wavelength of 590 nm at 23°C. The positive C plate preferably has a similar light transmittance. Note that a theoretical upper limit of the light transmittance is 100%.

The solidified layer or cured layer of a liquid crystal composition containing a calamitic liquid crystal compound in homeotropic alignment may further contain polymer liquid crystals represented by the following general formula (I). The polymer liquid crystals are used for improving alignment property of the calamitic liquid crystal compound.

[Chemical formula 1]

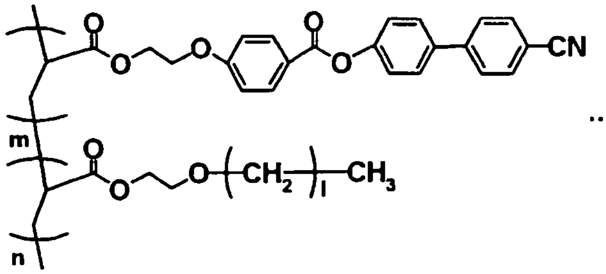

··· (I)

In the general formula (1), 1 represents an integer of 14 to 20. When a sum of m and n is 100, m is 50 to 70 and n is 30 to 50.

A content of the polymer liquid crystals is preferably 10 parts by weight to 40 parts by weight, and more preferably 15 parts by weight to 30 parts by weight with respect to 100 parts by weight of a total solid content in the solidified layer or cured layer of a liquid crystal composition containing a calamitic liquid crystal compound in homeotropic alignment.

The solidified layer or cured layer of a liquid crystal composition containing a calamitic liquid crystal compound in homeotropic alignment may be obtained through Steps 1 to 3 described below, for example. To be specific, the solidified layer or cured layer may be obtained through: a step of subjecting a surface of a substrate (also referred to as a support) to vertical alignment treatment (Step 1); a step of applying a solution or dispersion of a liquid crystal composition to the surface of the substrate subjected to the vertical alignment treatment for homeotropic alignment of a calamitic liquid crystal compound in the liquid crystal composition (Step 2); and a step of drying the liquid crystal composition for solidification (Step 3). The method preferably includes a step of irradiating the liquid crystal composition with UV rays for curing (Step 4) after Steps 1 to 3. Note that the substrate is generally peeled off before the retardation film (the layer) is applied to practical use.

Fig. **5** is a schematic diagram explaining a scheme of a method of producing a retardation film to be used for a positive C plate according to a preferred embodiment of the present invention. In this step, a substrate **402** is supplied from a delivery part **401** and delivered by a guide roll **403** to a first coater part **404,** where a solution or dispersion of an alignment agent is applied. The substrate having the alignment agent applied is delivered to a first drying means **405,** where a solvent is evaporated and an alignment agent layer (also referred as alignment film) is formed thereon. Next, a solution or dispersion of a liquid crystal composition is applied to the substrate **406** having the alignment film formed on its surface in a second coater part **407,** and a solvent is evaporated with a second drying means **408**, to thereby form a solidified layer of a liquid crystal composition containing a calamitic liquid crystal compound in homeotropic alignment. Next, the substrate **409** having the solidified layer of a liquid crystal composition containing a calamitic liquid crystal compound in homeotropic alignment formed thereon is delivered to a UV irradiation part **410,** where a surface of the solidified layer is irradiated with UV rays, to thereby form a cured layer of a liquid crystal composition containing a calamitic liquid crystal compound in homeotropic alignment. Note that the UV irradiation part **410** is typically provided

with a UV lamp **412** and a temperature control means **411.** Then, the substrate **413** having the cured layer formed thereon is taken-up in a take-up part **414** and is supplied to a step of producing a liquid crystal panel (step of attaching the cured layer to a liquid crystal cell, for example).

The substrate to be used in Step 1 (the step of subjecting a surface of a substrate to vertical alignment treatment) is used for thinly and uniformly flow casting the solution or dispersion of a liquid crystal composition. Any appropriate material may be selected as a material used for forming the substrate. Specific examples thereof include: a glass substrate such as a glass sheet or a quarts substrate; a polymer substrate such as a film or a plastic substrate; a metal substrate formed of aluminum, iron, or the like; an inorganic substrate such as a ceramics substrate; and a semiconductor substrate such as a silicon wafer. The substrate is preferably a polymer substrate because the polymer substrate may provide excellent smoothness on a substrate surface or excellent wetness to a liquid crystal composition, and may allow continuous production with a roll to thereby significantly improve productivity.

Examples of a material used for forming the polymer substrate include a thermosetting resin, a UV-curable resin, a thermoplastic resin, a thermoplastic elastomer, and a biodegradable plastic. Of those, the thermoplastic resin is preferably used. The thermoplastic resin may be a non-crystalline polymer or a crystalline polymer. The non-crystalline polymer has an advantage of excellent transparency and thus may be used for a liquid crystal panel or the like as it is without peeling off the retardation film from the substrate. Meanwhile, the crystalline polymer has an advantage of excellent rigidity, strength, and chemical resistance and thus provides excellent production stability in production of the retardation film. The polymer substrate may also serve as the retardation film to be used for the first positive A plate in the present invention. Referring to Fig. **2,** for example, a stretched film of a polymer film containing as a main component a thermoplastic resin may be used as the first positive A plate **32** serving as a substrate (support), and a solidified layer or cured layer (eventually, the positive C plate **33**) of a liquid crystal composition containing a calamitic liquid crystal compound in homeotropic alignment may be formed on a surface of the substrate. According to such embodiment, since production process can be simplified, it is advantageous for industrial production of a first laminated optical element from the viewpoints of cost and productivity.

The vertical alignment treatment is used for homeotropic alignment of the calamitic liquid crystal compound in the liquid crystal composition. Any appropriate method may be employed as the vertical alignment treatment. A preferred example of the method involves adsorbing an alignment agent on a surface of a substrate to form a layer of an alignment agent (also referred to as an alignment film).Inthisway, a retardation filmhaving extremely few alignment defects (disclination) of the calamitic liquid crystal compound can be produced.

In the vertical alignment treatment, examples of the method of adsorbing an alignment agent on a surface of a substrate include a solvent coating method, a plasma polymerization method, and a sputtering method. The solution coatingmethod is preferredbecause the method provides excellent continuous productivity, operability, and economical efficiency and allows uniform alignment of the calamitic liquid crystal compound. In the specification of the present invention, the term "solution coating method" refers to a method involving applying a solution or dispersion of an alignment agent on a surface of a substrate and drying the solution or dispersion to form an alignment film.

Any appropriate alignment agent may be used for the vertical alignment treatment. Specific examples thereof include lecithin, stearic acid, hexadecyl trimethyl ammonium bromide, octadecylamine hydrochloride, a monobasic chromium carboxylate complex (such as a chromium myristate complex or a chromium perfluorononanoate complex), an organic silane (such as a silane coupling agent or siloxane),perfluorodimethylcyclohexane, tetrafluoroethylene, and polytetrafluoroethylene. Of those, an organic silane is particularly preferably used as the alignment agent because of its excellent workability, product quality, and capability of aligning the calamitic liquid crystal compound. A specific example of the organic silane as the alignment agent is "Ethyl silicate", trade name, available from COLCOAT Co., Ltd., containing tetraethoxysilane as a main component.

For a method of preparing the solution or dispersion of an alignment agent, a solution or dispersion of a commercially available alignment agent may be used as it is, or a solvent may be added to a solution or dispersion of a commercially available alignment agent. Alternatively, a solid content of an alignment agent may be dissolved in various solvents, or the alignment agent, various additives, and a solvent may be mixed to be dissolved.

A total solid content in the solution of the alignment agent may vary depending on solubility, application viscosity, wetness on a substrate, thickness after application, and the like. However, the total solid content is generally 0.05 to 20 parts by weight, more preferably 0.5 to 10 parts by weight, and particularly preferably 1 to 5 parts by weight with respect to 100 parts by weight of the solvent. A total solid content within the above ranges may provide a retardation film having high surface uniformity.

The solvent to be used for the alignment agent preferably employs a liquid substance capable of uniformly dissolving the alignment agent into a solution. The solvent may be a nonpolar solvent such as benzene or hexane, or a polar solvent such as water or alcohol. Further, the solvent may be: an inorganic solvent such as water; or an organic solvent such as alcohols, ketones, ethers, esters, aliphatic and aromatic hydrocarbons, halogenated hydrocarbons, amides, and cellosolves. The solvent is preferably at least one solvent selected from cyclopentanone, cyclohexanone, methyl ethyl ketone, and tetrahydrofuran. Those solvents are preferred because the solvents each do not corrode the

substrate to provide adverse effects for practical use and are each capable of sufficiently dissolving the alignment agent.

For a method of applying the solution or dispersion of the alignment agent, any appropriate application method employing a coater may be selected. Specific examples of the coater include a reverse roll coater, a positive rotation roll coater, a gravure coater, a knife coater, a rod coater, a slot orifice coater, a curtain coater, a fountain coater, an air doctor coater, a kiss coater, a dip coater, a bead coater, a blade coater, a cast coater, a spray coater, a spin coater, an extrusion coater, and a hot melt coater. Of those, preferred examples of the coater include a reverse roll coater, a positive rotation roll coater, a gravure coater, a rod coater, a slot orifice coater, a curtain coater, a fountain coater, and a spin coater. An application method employing the above-mentioned coater can provide an extremely thin alignment film having excellent uniformity.

A method of drying the solution or dispersion of an alignment agent (also referred to as drying means) may appropriately be selected from, for example, heating methods or temperature control methods using: an air-circulating thermostatic oven in which hot air or cool air circulates; a heater using microwaves, far infrared rays, or the like; a heated roll for temperature adjustment; a heat pipe roll; and a metallic belt.

A temperature for drying the solution or dispersion of an alignment agent is preferably a glass transition temperature (Tg) of the substrate or lower. To be specific, the drying temperature is preferably 50°C to 180°C, and more preferably 80°C to 150°C. A drying time is 1 minute to 20 minutes, for example, preferably 1 minute to 10 minutes, and more preferably 1 minute to 5 minutes.

In Step 2 (the step of applying a solution or dispersion of a liquid crystal composition to a surface of the substrate subjected to the vertical alignment treatment for homeotropic alignment of a calamitic liquid crystal compound in the liquid crystal composition), the method of applying a solution or dispersion of a liquid crystal composition may appropriately be selected from methods similar to the above-mentioned methods of applying an alignment agent.

For a method of preparing the solution or dispersion of a liquid crystal composition, a solution or dispersion of a commercially available liquid crystal composition may be used as it is, or a solvent may be added to a solution or dispersion of a commercially available liquid crystal composition. Alternatively, a solid content of a liquid crystal composition may be dissolved in various solvents, or the liquid crystal composition, various additives, and a solvent may be mixed to be dissolved.

A total solid content in the solution of the liquid crystal composition may vary depending on solubility, application viscosity, wetness on a substrate, thickness after application, and the like. However, the total solid content is preferably 10 to 100 parts by weight, more preferably 20 to 80 parts by weight, and particularly preferably 30 to 60 parts by weight with respect to 100 parts by weight of the solvent. A total solid content within the above ranges may provide a retardation film having high surface uniformity.

The solvent to be used for the liquid crystal composition preferably employs a liquid substance which is capable of uniformly dissolving the liquid crystal compound into a solution and which hardly dissolves the alignment film. The solvent is preferably at least one solvent selected from cyclopentanone, cyclohexanone, methyl isobutyl ketone, toluene, and ethyl acetate. Those solvents are preferred because the solvents each do not corrode the substrate to provide adverse effects for practical use and are each capable of sufficiently dissolving the liquid crystal composition.

In Step 3 (the step of drying a liquid crystal composition for solidification), a method of drying the liquid crystal composition (also referred to as drying means) may appropriately be selected from, for example, heating methods or temperature control methods using: an air-circulating thermostatic oven in which hot air or cool air circulates; a heater using microwaves, far infrared rays, or the like; a heated roller for temperature adjustment; a heat pipe roll; and a metallic belt.

A temperature for drying the liquid crystal composition is preferably within a temperature range in which the liquid crystal composition exhibits a liquid crystal phase and a glass transition temperature (Tg) of the substrate or lower. To be specific, the drying temperature is preferably 50°C to 130°C, and more preferably 70°C to 120°C. A drying time is generally 1 minute to 20 minutes, preferably 1 minute to 10 minutes, and more preferably 1 minute to 5 minutes. Under the above-mentioned conditions, a retardation film having high uniformity may be produced.

The method of forming the retardation film to be used for the positive C plate preferably includes a step of irradiating the liquid crystal composition with UV rays for curing (Step 4) after Steps 1 to 3. In this case, the calamitic liquid crystal compound preferably contains at least one polymerizable or crosslinkable functional group in a part of a molecular structure. The calamitic liquid crystal compound is polymerized or crosslinked, to thereby increase mechanical strength of a retardation film and provide a retardation film having excellent durability and dimensional stability.

A method of curing the liquid crystal composition may appropriately be selected from methods each using an irradiation device employing as a light source such as an ultra-high pressure mercury lamp, a dielectric excimer discharge lamp, a flash UV lamp, a high pressure mercury lamp, a low pressure mercury lamp, a deep UV lamp, a xenon lamp, a xenon flash lamp, or a metal halide lamp.

A wavelength of a light source to be used for the irradiation of UV rays may be determined in accordance with a wavelength region in which the polymerizable or crosslinkable functional group of the calamitic liquid crystal compound exhibits optical absorption. The wavelength region of a light source is generally 210 nm to 380 nm, and more preferably

250 nm to 380 nm. A vacuum UV region of 100 nm to 200 nm is preferably cut with a filter or the like from the wavelength region of the light source for suppressing a photodecomposition reaction of the calamitic liquid crystal compound. A wavelength region of a light source within the above ranges may allow sufficient curing of the calamitic liquid crystal compound through a polymerization or crosslinking reaction and may provide a retardation film having excellent mechanical strength.

An irradiation amount of the UV rays measured at a wavelength of 365 nm is preferably 30 $mJ/cm^2$ to 1,000 $mJ/cm^2$, more preferably 50 $mJ/cm^2$ to 800 $mJ/cm^2$, and particularly preferably 100 $mJ/cm^2$ to 500 $mJ/cm^2$. An irradiation amount within the above ranges may allow sufficient polymerization or crosslinking of the calamitic liquid crystal compound through a polymerization or crosslinking reaction and may provide a retardation film having excellent mechanical strength.

A temperature (also referred to as an irradiation temperature) inside an irradiation device during the irradiation of UV rays is preferably held at a liquid crystal phase-isotropic phase transition temperature (Ti) of the liquid crystal composition or lower. The irradiation temperature is more preferably held at Ti-5°C or lower, and particularly preferably Ti-10°C or lower. To be specific, the irradiation temperature is preferably 15°C to 90°C, and more preferably 15°C to 60 °C. An irradiation temperature within the above ranges may provide a retardation film having high uniformity.

A method of holding the irradiation temperature constant (also referred to as temperature control means) may appropriately be selected from, for example, heating methods or temperature control methods using: an air-circulating thermostatic oven in which hot air or cool air circulates; a heater using microwaves, far infrared rays, or the like; a heated roll for temperature adjustment; a heat pipe roll; and a metallic belt.

<H. Second laminated optical element>

Referring to Fig. **2,** the second laminated optical element **50** to be used in the present invention is arranged between the liquid crystal cell **10** and the second polarizer **40** arranged on a backlight side of the liquid crystal cell **10.** The second laminated optical element **50** includes the second negative C plate **51** and the second positive A plate **52** arranged in the stated order from a vicinity of the second polarizer **40**. The second positive A plate **52** is arranged such that its slow axis is substantially parallel to an alignment direction of the liquid crystal cell **10.** The structural members of the second laminated optical element will be described more specifically in sections I and J described below.

<I. Second positive A plate>

In the present invention, the second positive A plate is used for optically compensating an in-plane retardation value of a liquid crystal cell in black display. To be specific, in the case where the in-plane retardation value of the liquid crystal cell in black display is λ/2 (λ represents any appropriate wavelength (nm) in a visible light region), for example, the second positive A plate is laminated such that an in-plane retardation value of a laminate of the liquid crystal cell and the second positive A plate is adjusted to λ. Referring to Figs. **1** and **2,** the second positive A plate **52** is arranged between the liquid crystal cell **10** and the second negative C plate **51** such that its slow axis is substantially parallel to an alignment direction of the liquid crystal cell. As an angle greatly departs from the above-mentioned ranges, contrast ratios tend to reduce in frontal and oblique directions in a liquid crystal display apparatus employing the second positive A plate **52.** Note that in the specification of the present invention, the alignment direction of the liquid crystal cell refers to a slow axis direction of a liquid crystal layer caused by an alignment of liquid crystal molecules in the liquid crystal layer, or a direction of extraordinary index.

<I-1. Optical properties of second positive A plate>

Re [590] of the second positive A plate to be used in the present invention may appropriately be selected in accordance with Re [590] of the liquid crystal cell to be used. Re [590] of the second positive A plate is preferably adjusted such that a sum ($Re[590]^{SUM}$) of Re [590] of the second positive A plate and Re[590] of the liquid crystal cell falls within the range of 500 nm to 650 nm. The $Re[590]^{SUM}$ is more preferably 510 nm to 630 nm, particularly preferably 520 nm to 610 nm, and most preferably 530 nmto 600 nm. $Re[590]^{SUM}$ is adjusted to about a center wavelength of visible light of 590 nm, to thereby increase a contrast ratio in an oblique direction and reduce a color shift in an oblique direction of a liquid crystal display apparatus.

To be specific, Re [590] of the second positive A plate is 20 nm or more, preferably 20 nm to 400 nm, more preferably 50 nm to 370 nm, particularly preferably 80 nm to 340 nm, and most preferably 100 nm to 250 nm. The Re [590] within the above-mentioned ranges can provide a synergetic effect of exhibiting the functions of the respective optical elements, and allows increase of a contrast ratio in an oblique direction and reduction of a color shift in an oblique direction of a liquid crystal display apparatus.

An absolute value: |Rth[590]|-|Re[590]| of a difference between Re[590] and Rth[590]of the second positive A plate to be used in the present invention is 10 nm or less, preferably 5 nm or less, and more preferably 2 nm or less.

Note that a theoretical lower limit for |Rth[590]|-|Re[590]| of the positive A plate is 0 nm.

Re [480] /Re [590] of the second positive A plate is preferably more than 0.8 and less than 1.2, and more preferably more than 0.8 and less than 1.0. In the case where Re [480] /Re [590] is less than 1, the retardation values become smaller as a wavelength shortens, and this phenomenon is referred to as "reverse wavelength dispersion property". A retardation film exhibiting reverse wavelength dispersion property has uniform retardation value in a wide visible light region. Thus, a liquid crystal display apparatus employing such a retardation film hardly causes light leak of a specific wavelength, and color shift in an oblique direction in black display of a liquid crystal display apparatus may be further reduced.

<I-2. Means for arranging second positive A plate>

Referring to Fig. **2,** any appropriate method may be employed as a method of arranging the second positive A plate **52** between the liquid crystal cell **10** and the second negative C plate **51.** Preferably, the secondpositiveAplate **52** is provided with an adhesive layer (not shown) on each side and is attached to the liquid crystal cell **10** and the second negative C plate **51.** In this way, gaps among the optical elements are filled with the adhesive layers, to thereby prevent shift in relationships among optical axes of the respective optical elements, and prevent damages on the optical elements due to abrasion of the respective optical elements upon incorporating into the liquid crystal display apparatus. Further, adverse effects such as reflection or refraction that generates at the interface between layers of optical elements may be reduced, to thereby allow increase in contrast ratios in frontal or oblique directions of a liquid crystal display apparatus.

The thickness of the adhesive layer and the material used for forming the adhesive layer may appropriately be selected from those described in the above-mentioned section C-2 or from similar ranges and materials described in the above-mentioned section E-2.

<I-3. Structure of second positive A plate>

A structure (laminate structure) of the second positive A plate is not particularly limited as long as the optical properties described in the above-mentioned section I-1 are satisfied. The second positive A plate may be a single retardation film or a laminate of two or more retardation films. The second positive A plate is preferably a single retardation film, for reducing shift or unevenness in retardation values due to shrinkage stress of the polarizers or heat of backlight of a liquid crystal display apparatus incorporating the retardation film and for reducing a thickness of a liquid crystal panel. In the case where the second positive A plate is formed of a laminate, an adhesive layer for attaching two or more retardation films may be included. In the case where the laminate includes two or more retardation films, the retardation films may be identical to or different from each other. Note that the details of the retardation film will be described in the section I-4 described below.

Re[590] of the retardation film to be used for the second positive A plate may appropriately be selected in accordance with the number of the retardation films. In the case where the second positive A plate is formed of a single retardation film, for example, Re[590] of the retardation film is preferably equal to Re[590] of the second positive A plate. Thus, retardation values of adhesive layers to be used for laminating the second positive A plate to the liquid crystal cell and the second negative C plate are preferably as small as possible. Further, in the case where the second positive A plate is formed of a laminate including two or more retardation films, for example, the laminate is preferably designed such that total Re[590] of the retardation films is equal to Re[590] of the second positive A plate. To be specific, the first positive A plate having Re [590] of 100 nmmay be obtained by laminating two retardation films each having Re[590] of 50 nm such that respective slow axes are parallel to each other. Note that the second positive A plate formed of two or less retardation films was described for clarity, but the present invention may obviously be applied to a laminate including three or more retardation films.

A total thickness of the second positive A plate is preferably 0. 1 μm to 200 μm, more preferably 0. 5 μm to 150 μm, and most preferably 1 μm to 100 μm. A total thickness thereof within the above-mentioned ranges can provide an optical element having excellent optical uniformity.

<I-4. Retardation film to be used for second positive A plate>

The retardation film to be used for the second positive A plate is not particularly limited, and may appropriately be selected from those described in the above-mentioned sections F-4, F-4-1, and F-4-2, for example. Note that a material used for forming the retardation film to be used for the second positive A plate may be identical to or different from the material used for the first positive A plate.

<J. Second negative C plate>

Referring to Figs. **1** and **2,** the second negative C plate **51** is arranged between the second positive A plate **52** and the second polarizer **40.** According to this embodiment, the second negative C plate **51** also serves as a protective layer on a liquid crystal cell side of the second polarizer **40** such that a display screen may maintain uniformity for a long period of time even in the case where the polarizer is used in a liquid crystal display apparatus in a high temperature and high humidity environment, for example.

In the case where nx and ny are completely equal, the second negative C plate **51** has no in-plane retardation value, so a slow axis is not detected. Thus, the second negative C plate may be arranged independently of an absorption axis of the second polarizer **40** and a slow axis of the second positive A plate **52.** In the case where nx and ny are substantially equal but slightly different, the slow axis may be detected. In this case, the second negative C plate **51** is preferably arranged such that its slow axis is substantially parallel or substantially perpendicular to the absorption axis of the second polarizer **40.** As an angle greatly departs from the above-mentioned ranges, contrast ratios tend to reduce in frontal and oblique directions in a liquid crystal display apparatus employing the second negative C plate **51.**

<J-1. Optical properties of second negative C plate>

Re [590] of the second negative C plate to be used in the present invention is preferably 10 nm or less, more preferably 5 nm or less, and most preferably 3 nm or less. Note that a theoretical lower limit for Re[590] of the second negative C plate is 0 nm.

Preferably, Rth[590] of the second negative C plate is substantially equal to Rth[590] of the first negative C plate. To be specific, similar to those described in the above-mentioned section E-1, Rth[590] of the second negative C plate is 20 nm or more, preferably 30 nm to 200 nm, more preferably 30 nm to 120 nm, particularly preferably 40 nm to 110 nm, and most preferably 50 nm to 100 nm. Rth [590] within the above-mentioned ranges can provide a synergetic effect of exhibiting the functions of the respective optical elements, and allows increase of a contrast ratio in an oblique direction and reduction of a color shift in an oblique direction of a liquid crystal display apparatus.

<J-2. Means for arranging second negative C plate>

Referring to Fig. **2,** any appropriate method may be employed as a method of arranging the second negative C plate **51.** The second negative C plate **51** is preferably provided with an adhesive layer (not shown) on each side and is attached to the second positive A plate **52** and the second polarizer **40.** In this way, gaps among the optical elements are filled with the adhesive layers, to thereby prevent shift in relationships among optical axes of the respective optical elements, and prevent damages on the optical elements due to abrasion of the respective optical elements upon incorporating into the liquid crystal display apparatus. Further, adverse effects such as reflection or refraction that generates at the interface between layers of optical elements may be reduced, to thereby allow increase in contrast ratios in frontal or oblique directions of a liquid crystal display apparatus.

The adhesive layer is not particularly limited and may appropriately be selected from those each having a similar thickness and formed of a similar material described in the above-mentioned section E-2.

<J-3. Structure of second negative C plate>

A structure (laminate structure) of the second negative C plate is not particularly limited as long as the optical properties described in the above-mentioned section J-1 are satisfied. To be specific, the second negative C plate may be a single retardation film or a laminate of two or more retardation films. The second negative C plate is preferably a single retardation film, for reducing shift or unevenness in retardation values due to shrinkage stress of the polarizers or heat of backlight of a liquid crystal display apparatus incorporating the retardation film and for reducing a thickness of a liquid crystal panel. In the case where the second negative C plate is formed of a laminate, an adhesive layer (such as an adhesive layer or an anchor coat layer) may be included. In the case where the laminate includes two or more retardation films, the retardation films may be identical to or different from each other. Note that the details of the retardation film will be described in the section J-4 described below.

<J-4. Retardation film to be used for second negative C plate>

The retardation film to be used for the second negative C plate is not particularly limited, and may appropriately be selected from those described in the above-mentioned section E-4 (E-4-1, E-4-2), for example. Note that a material used for forming the retardation film to be used for the second negative C plate may be identical to or different from the material used for the first negative C plate.

<K. Overview of liquid crystal display apparatus of the present invention>

Fig. **6** is a schematic sectional view of a liquid crystal display apparatus according to a preferred embodiment of the present invention. Note that ratios among length, width, and thickness of each member in Fig. **6** are different from those of an actual member for clarity. A liquid crystal display apparatus **200** is provided with: a liquid crystal panel **100;** protective layers **60** and **60'** arranged on both sides of the liquid crystal panel; surface treated layers **70** and **70'** arranged on outer sides of the protective layers **60** and **60';** and a brightness enhancement film **80,** a prism sheet **110,** a light guide plate **120,** and backlight **130** arranged on an outer side (backlight side) of the surface treated layer **70'.** Treated layers subjected to hard coat treatment, antireflection treatment, anti-sticking treatment, diffusion treatment (also referred to as anti-glare treatment), or the like is used as the surface treated layers **70** and **70'.** A polarization separation film having a polarization selection layer "D-BEF series" (trade name, available from Sumitomo 3M Limited, for example) or the like is used as the brightness enhancement film **80.** The above-described optical members are used, to thereby obtain a display apparatus having better display properties. According to another embodiment, the optical members shown in Fig. **6** may be partly omitted or replaced by other members in accordance with the drive mode or application of the liquid crystal cell to be used as long as the effects of the present invention are obtained.

The liquid crystal display apparatus provided with the liquid crystal panel of the present invention has a contrast ratio (YW/YB) of preferably 10 or more, more preferably 30 or more, particularly preferably 50 or more, and most preferably 70 or more at an azimuth angle of 45° and a polar angle of 70°.

More preferably, the liquid crystal display apparatus provided with the liquid crystal panel of the present invention has a color shift ($\Delta xy$ value) of preferably 0.5 or less, more preferably 0.4 or less, particularly preferably 0.3 or less, and most preferably 0.25 or less at an azimuth angle of 45° and a polar angle of 70°, in addition to the above-described contrast ratio.

<L. Application of liquid crystal panel and liquid crystal display apparatus of the present invention>

The application of the liquid crystal panel and liquid crystal display apparatus of the present invention is not particularly limited, but the liquid crystal panel and liquid crystal display apparatus of the present invention may be used for various applications such as: office automation (OA) devices such as a personal computer monitor, a laptop personal computer, and a copying machine; portable devices such as a cellular phone, a watch, a digital camera, a personal digital assistance (PDA), and a portable game machine; home appliances such as a video camera, a liquid crystal television, and a microwave; in-car devices such as a back monitor, a car navigation system monitor, and a car audio; display devices such as a commercial information monitor; security devices such as a surveillance monitor; and nursing care/medical devices such as a nursing monitor and a medical monitor.

In particular, the liquid crystal panel and liquid crystal display apparatus of the present invention are preferably used for a large liquid crystal television. A liquid crystal television employing the liquid crystal panel and liquid crystal display apparatus of the present invention has a screen size of preferably wide 17-inch (373 mm × 224 mm) or more, more preferably wide 23-inch (499 mm × 300 mm) or more, particularly preferably wide 26-inch (566 mm × 339 mm) or more, and most preferably wide 32-inch (687 mm × 412 mm) or more.

Examples

The present invention will be described in more detail by using the following examples and comparative examples. However, the present invention is not limited to the examples. Analysis methods used in the examples are described below.

(1) Method of determining single axis transmittance and degree of polarization:

The single axis transmittance and degree of polarization were determined at 23°C by using a spectrophotometer "DOT-3" (trade name, manufactured by Murakami Color Research Laboratory).

(2) Method of determining molecular weight:

The molecular weight was calculated through gel permeation chromatography (GPC) by using polystyrene as a standard sample. To be specific, the molecular weight was determined under the following measurement conditions by using the following apparatus and instruments.

· Analyzer: "HLC-8120GPC", manufactured by Tosoh Corporation · Column: TSKgel SuperHM-H/H4000/H3000/H2000

· Column size: 6.0 mmI.D. × 150 mm
· Eluant: tetrahydrofuran
· Flow rate: 0.6 ml/minute
· Detector: RI
· Column temperature: 40°C
· Injection amount: 20 μl

(3) Method of measuring thickness:

A thickness of less than 10 μm was measured by using a thin film thickness spectrophotometer "Multichannel photodetector MCPD-2000" (trade name, manufactured by Otsuka Electronics Co., Ltd.). A thickness of 10 μm or more was measured by using a digital micrometer "KC-351C-type" (trade name, manufactured by Anritsu Corporation).

(4) Method of determining retardation values (Re, Rth):

The retardation values were determined by using an automatic birefringence analyzer "KOBRA21-ADH" (trade name, manufactured by Oji Scientific Instruments) based on a parallel Nicol rotation method by using light of a wavelength of 590 nm at 23 °C. Light of a wavelength of 480 nm was also used for wavelength dispersion measurement.

(5) Method of measuring refractive index of film:

The refractive index of the film was determined by measuring refractive indices by using an Abbe refractometer "DR-M4" (trade name, manufactured by Atago Co., Ltd.) by using light of a wavelength of 589 nm at 23°C.

(6) Method of measuring transmittance:

The transmittance was measured by using a UV-vis spectrophotometer "V-560" (trade name, manufactured by JASCO Corporation) by using light of a wavelength of 590 nm at 23°C.

(7) Method of determining photoelastic coefficient:

The retardation values (23°C/wavelength of 590 nm) at a center of a sample having a size of 2 cm × 10 cm were determined under stress (5 to 15 N) by using a spectroscopic ellipsometer "M-220" (trade name, manufactured by JASCO Corporation) while both ends of the sample were held, and the photoelastic coefficient was calculated from a slope of a function of the stress and the retardation values.

(8) UV irradiation method:

A UV irradiation apparatus having a metal halide lamp with a light intensity of 120 mW/cm$^2$ at a wavelength of 365 nm as a light source was used.

(9) Method of determining contrast ratio of liquid crystal display apparatus:

After backlight was turned on in a dark room at 23°C for a predetermined period of time, measurement of a contrast ratio was performed by using the following method and measurement apparatus. A white image and a black image were displayed on a liquid crystal display apparatus, and Y values in an XYZ display system were measured at an azimuth angle of 45° and polar angle of 70°, which is one of a strongest light leak direction on a display screen, by using "EZ Contrast 160D" (tradename, manufactured by ELDIM SA). Acontrast ratio "YW/YB" in an oblique direction was calculated from a Y value (YW) of the white image and a Y value (YB) of the black image. Note that, the azimuth angle of 45° refers to a direction rotated by 45° in a counter clockwise direction with respect to a longer side of the panel at 0°. The polar angle of 70° refers to a direction inclined by 70° with respect to a normal line direction of the display screen at 0°.

(10) Method of measuring color shift of liquid crystal display apparatus:

After backlight was turned on in a dark room at 23°C for a predetermined period of time, measurement of a color shift was performed by a method described below and by using a measuring device described below. A black image was displayed on a liquid crystal display apparatus, and an x value and a y value in an XYZ color system were measured at an azimuth angle of 45° and a polar angle of 70°, which is one of a strongest colored direction on a display screen, by using "EZ Contrast 160D" (trade name, manufactured by ELDIM SA) . A color shift in an oblique direction (i.e., Δxy value) was calculated from an expression $\Delta xy = \{(x-0.31)^2+(y-0.31)^2\}^{1/2}$ as a shift from an ideal state ($X_0$ = 0.31, $y_0$= 0.31). The azimuth angle of 45° refers to a direction rotated counter-clockwise by 45° when a long side of a panel is set to 0°. The polar angle of 70° refers to a direction seen obliquely from an angle of 70° when a direction vertical to a panel is set to 0°.

[Reference Example 1]

<Production of retardation film to be used for negative C plate>

17.7 parts by weight of a polyetheretherketone-based resin (weight average molecular weight = 520, 000, average refractive index = 1.56) represented by the following formula (II) is dissolved in 100 parts by weight of methyl isobutyl ketone, to thereby prepare a resin solution having a total solid content of 15 wt%. The resin solution was applied uniformly to a surface of a commercially available polyethylene terephthalate film ["Lumirror S27-E", trade name, available from Toray Industries, Inc. (thickness of 75 μm)] by using a rod coater, and the whole was dried in an air-circulating thermostatic oven at 135°C ± 1°C for 5 minutes, and then in an air-circulating thermostatic oven at 150°C ± 1°C for 10 minutes, to thereby evaporate the solvent. The polyethylene terephthalate film was peeled off, to thereby obtain a polymer film containing as a main component a polyetheretherketone-based resin. This polymer film was referred to as a retardation film A-1. Table 1 shows properties of the retardation film A-1 together with the properties of films of Reference Examples 2 and 3 described below.

[Chemical formula 2]

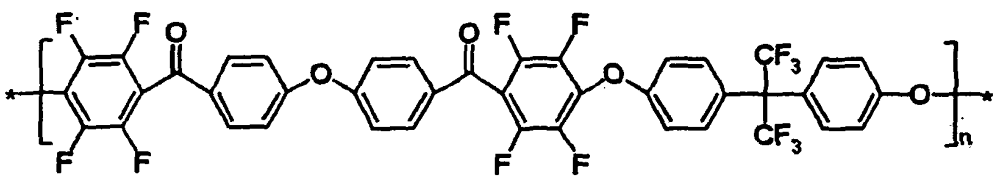
··· (II)

[Reference Example 2]

A polymer film containing as a main component a cycloolefin-based resin obtained through hydrogenation of a ring-opened polymer of a norbornene-based monomer ["Arton F", trade name, available from JSR Corporation (thickness of 100 μm, glass transition temperature = 171°C, average refractive index = 1.51, Re[590] = 5 nm, Rth[590] = 18 nm)] was stretched 1.2 times in a longitudinal direction and 1.2 times in a transverse direction in an air-circulating thermostatic oven at 190°C ± 2°C by using a biaxial stretching machine (longitudinal and transverse sequential biaxial stretching). The obtained stretched film was referred to as a retardation filmA-2. Table 1 shows the properties of the retardation film A-2.

[Reference Example 3]

A commercially available polymer film containing as a main component triacetyl cellulose ["Fujitac", trade name, available from Fuji Photo Film, Co. , Ltd. (thickness of 80 μm, average refractive index = 1.48)] was used as it is. This polymer film was referred to as a retardation film A-3. Table 1 shows the properties of the retardation film A-3.

[Table 1]

| | Reference Example 1 | Reference Example 2 | Reference Example 3 |
|---|---|---|---|
| Retardation film | A-1 | A-2 | A-3 |
| Thickness (μm) | 3.6 | 80 | 80 |
| Transmittance (%) | 92 | 92 | 92 |
| Re[590](nm) | 0.2 | 0.6 | 1.0 |
| Rth[590](nm) | 30 | 54 | 80 |
| $C[590] \times 10^{-12} (m^2/N)$ | 78.3 | 17.8 | 5.0 |

[Reference Example 4]

<Production of retardation film to be used for positive A plate>

70 parts by weight of a cycloolefin-based resin obtained through hydrogenation of a ring-opened polymer of a norbornene-based monomer ["Arton", trade name, available from JSR Corporation (glass transition temperature = 171°C, weight average molecular weight = 130,000, hydrogenation rate = 99.9%)], and 30 parts by weight of a styrene/maleic anhydride copolymer [available from Sigma-Aldrich Japan K.K. (glass transition temperature = 120°C, weight average molecular weight = 224,000)] were dissolved in 300 parts by weight of toluene, to thereby prepare a solution of a resin composition having a total solid content of 25 wt%. This solution was applied uniformly to a surface of a commercially available polyethylene terephthalate film ["Lumirror S27-E", trade name, available from Toray Industries, Inc. (thickness of 75 μm)] by using a rod coater, and the whole was dried in an air-circulating thermostatic oven at 135°C ± 1°C for 10 minutes, to thereby evaporate the solvent. The polyethylene terephthalate film was peeled off, to thereby obtain a polymer film (Re[590] = 3 nm, Rth[590] = 4 nm, average refractive index = 1.52)) containing as a main component a resin composition containing the cycloolefin-based resin and the styrene/maleic anhydride copolymer and having a thickness of 83 μm. This polymer filmwas stretched 1. 2 times in one direction (i. e., longitudinal uniaxial stretching) in an air-circulating thermostatic oven at 120°C ± 1°C by using a biaxial stretching machine while only the longitudinal direction of the polymer film was fixed. The obtained stretched film was referred to as a retardation film B-1. Table 2 shows the properties of the retardation film B-1 together with the properties of films of Reference Examples 5 to 7 described below.

[Reference Example 5]

A retardation film B-2 was produced in the same manner as in Reference Example 4 except that the stretching ratio was changed to 1.35 times. Table 2 shows the properties of the retardation film B-2.

[Reference Example 6]

A retardation film B-3 was produced in the same manner as in Reference Example 4 except that: the stretching temperature was changed to 150 °C; and the stretching ratio was changed to 1. 5 times. Table 2 shows the properties of the retardation film B-3.

[Reference Example 7]

A retardation film B-4 was produced in the same manner as in Reference Example 4 except that: the stretching temperature was changed to 150°C; and the stretching ratio was changed to 1.7 times. Table 2 shows the properties of the retardation film B-4.

[Table 2]

| | Reference Example 4 | Reference Example 5 | Reference Example 6 | Reference Example 7 |
|---|---|---|---|---|
| Retardation film | B-1 | B-2 | B-3 | B-4 |
| Thickness (μm) | 68 | 64 | 54 | 51 |
| Transmittance (%) | 90 | 90 | 90 | 90 |
| Re[480] (nm) | 78 | 95 | 134 | 188 |
| Re[590] (nm) | 82 | 100 | 191 | 198 |
| Rth[590] (nm) | 82 | 101 | 141 | 198 |
| Re [480] /Re [590] | 0.95 | 0.95 | 0.95 | 0.95 |
| C[590]$\times 10^{-12}$ ($m^2$/N) | 9.9 | 9.9 | 9.9 | 9.9 |

[Reference Example 8]

<Production of retardation film to be used for positive C plate>

An ethyl silicate solution [available from Colcoat Co., Ltd. (a mixed solution of ethyl acetate and isopropyl alcohol, 2 wt%)] was applied to a commercially available polyethylene terephthalate film ["S-27E", trade name, available from Toray Industries, Inc. (thickness: 75 μm)] by using a gravure coater, and the whole was dried in an air-circulating thermostatic oven at 130° ± 1°C for 1 minute, to thereby form a glassy polymer film having a thickness of 0.1 μm on a surface of the polyethylene terephthalate film.

Next, 5 parts by weight of polymer liquid crystals (weight average molecular weight of 5,000) represented by the following formula (III), 20 parts by weight of a calamitic liquid crystal compound having two polymerizable functional groups in a part of a molecular structure ["Paliocolor LC242", trade name, available from BSAF Aktiengesellschaft (ne = 1.654, no = 1.523)], and 1.25 parts by weight of a photopolymerization initiator ["Irgacure 907", trade name, available from Ciba Specialty Chemicals] were dissolved in 75 parts by weight of cyclohexanone, to thereby prepare a solution of a liquid crystal composition. This solution was applied onto the glassy polymer film on the polyethylene terephthalate film by using a rod coater, and the whole was dried in an air-circulating thermostatic oven at 80°C ± 1°C for 2 minutes, and was then gradually cooled down to room temperature (23°C), to thereby form a solidified layer of a liquid crystal composition in homeotropic alignment on a surface of the polyethylene terephthalate film. Then, this solidified layer was irradiated with UV rays having irradiated light volume of 400 mJ/$cm^2$ (in an air atmosphere), to thereby cure the calamitic liquid crystal composition through a polymerization reaction. The polyethylene terephthalate film was peeled off, to thereby obtain a cured layer of a liquid crystal composition containing a calamitic liquid crystal compound in homeotropic alignment. The cured layer was referred to as a retardation film C-1. Table 3 shows the properties of the retardation film C-1 together with the properties of films of Reference Examples 9 and 10 described below.

[Chemical formula 3]

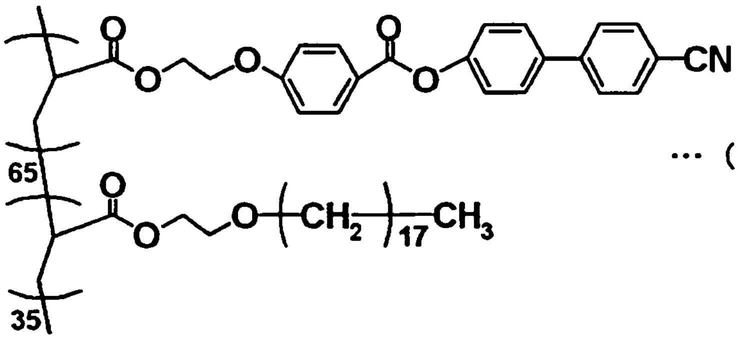

... (I I I)

[Reference Example 9]

A retardation film C-2 was produced in the same manner as in Reference Example 8 except that the applied thickness of the solution of a liquid crystal composition was changed. Table 3 shows the properties of the retardation film C-2.

[Reference Example 10]

A retardation film C-3 was produced in the same manner as in Reference Example 8 except that the applied thickness of the solution of a liquid crystal composition was changed. Table 3 shows the properties of the retardation film C-3.

[Table 3]

| | Reference Example 8 | Reference Example 9 | Reference Example 10 |
|---|---|---|---|
| Retardation film | C-1 | C-2 | C-3 |
| Thickness (μm) | 1.2 | 1.5 | 2.1 |
| Transmittance (%) | 92 | 92 | 92 |
| Re[590](nm) | 0.2 | 0.2 | 0.3 |
| Rth[590](nm) | -120 | -150 | -210 |

[Reference Example 11]

<Production of optical film to be used for polarizer>

A polymer film containing as a main component polyvinyl alcohol ["9P75R", trade name, available from Kuraray Co., Ltd. (thickness of 75 μm, average degree of polymerization = 2,400, degree of saponification = 99.9 mol%)] was uniaxially stretched 2.5 times by using a roll stretching machine while being colored in a coloring bath containing iodine and potassium iodide and held at 30°C ± 3°C. Then, the resultant was uniaxially stretched to a 6-times length of the original length of the polyvinyl alcohol film while performing a crosslinking reaction in an aqueous solution containing boric acid and potassium iodide and held at 60°C ± 3°C. The obtained film was dried in an air-circulating thermostatic oven at 50°C ± 1°C for 30 minutes, to thereby obtain polarizers P1 and P2 each having a moisture content of 23%, a thickness of 28 μm, a degree of polarization of 99.9%, and a single axis transmittance of 43.5%.

[Reference Example 12]

<Liquid crystal cell including liquid crystal layer containing nematic liquid crystals in homogeneous alignment>

A liquid crystal panel was taken out of a liquid crystal display apparatus including a liquid crystal cell of IPS mode ["KLV-17HR2", manufactured by Sony Corporation (panel size: 375 mm × 230 mm)]. Polarizing plates arranged above and below the liquid crystal cell were removed, and glass surfaces (i.e., front and back surfaces) of the liquid crystal cell were washed. This liquid crystal cell had Re[590] of 350 nm.

[Example 1]

<Production of liquid crystal panel and liquid crystal display apparatus>

To a surface of a viewer side of the liquid crystal cell provided with a liquid crystal layer in homogeneous alignment obtained in Reference Example 12, the retardation film C-2 (i.e., positive C plate) obtained in Reference Example 9 was attached through an adhesive layer formed of an acrylic-based pressure-sensitive adhesive and having a thickness of 20 μm such that a slow axis of the retardation film C-2 was substantially parallel (i.e., 0° ± 0.5°) to a long side of the liquid crystal cell. Next, to a surface of the retardation film C-2, the retardation film B-2 (i.e., first positive A plate) obtained in Reference Example 5 was attached through an adhesive layer formed of an acrylic-based pressure-sensitive adhesive and having a thickness of 20 μm such that a slow axis of the retardation film B-2 was substantially perpendicular (i.e., 90° ± 0.5°) to the long side of the liquid crystal cell. Then, to a surface of the retardation film B-2, the retardation film A-2 (i.e., first negative C plate) obtained in Reference Example 2 was attached through an adhesive layer formed of an acrylic-based pressure-sensitive adhesive and having a thickness of 20 μm such that a slow axis of the retardation film A-2 was substantially parallel (i.e., 0° ± 0.5°) to the long side of the liquid crystal cell. Then, to a surface of the retardation film A-2, the polarizer P1 (i.e., first polarizer) obtained in Reference Example 11 was attached through an adhesive layer formed of an isocyanate-based adhesive ["Takenate 631", trade name, available fromMitsui Takeda Chemicals, Inc.] and having a thickness of 5 μm such that an absorption axis of the polarizer P1 was substantially parallel (i.e., 0° ± 0.5°) to the long side of the liquid crystal cell. Note that to a surface of the polarizer P1, a commercially available triacetyl cellulose film (80 μm) was attached as a protective layer through an adhesive layer formed of an isocyanate-based adhesive ["Takenate 631", trade name, available from Mitsui Takeda Chemicals, Inc.] and having a thickness of 5 μm.

Next, to a surface of a backlight side of the liquid crystal cell, the retardation film B-4 (i.e., second positive A plate) obtained in Reference Example 7 was attached through an adhesive layer formed of an acrylic-based pressure-sensitive adhesive and having a thickness of 20 μm such that a slow axis of the retardation film B-4 was substantially parallel (i.e., 0° ± 0.5°) to an alignment direction of the liquid crystal cell (i.e. , such that the slow axis of the retardation film B-4 substantially perpendicular to the long side of the liquid crystal cell). Then, to a surface of the retardation film B-4, the retardation filmA-2 (i. e., second negative C plate) obtained in Reference Example 2 was attached through an adhesive layer formed of an acrylic-based pressure-sensitive adhesive and having a thickness of 20 μm such that a slow axis of the retardation film A-2 was substantially perpendicular (i.e., 90° ± 0.5°) to the long side of the liquid crystal cell. Then, to a surface of the retardation filmA-2, the polarizer P2 (i.e. , second polarizer) obtained in Reference Example 11 was attached through an adhesive layer formed of an isocyanate-based adhesive ["Takenate 631", trade name, available from Mitsui Takeda Chemicals, Inc.] and having a thickness of 5 μm such that an absorption axis of the polarizer P2 was substantially perpendicular (i.e., 90° ± 0.5°) to the long side of the liquid crystal cell. Note that to a surface of the polarizer P2, a commercially available triacetyl cellulose film (80 μm) was attached as a protective layer through an adhesive layer formed of an isocyanate-based adhesive ["Takenate 631", trade name, available from Mitsui Takeda Chemicals, Inc.] and having a thickness of 5 μm in the same manner as in the case of the polarizer P1.

The liquid crystal panel (i) thus produced has a structure shown in Fig. 2. This liquid crystal panel (i) was connected to a backlight unit, to thereby produce a liquid crystal display apparatus (i). Backlight was turned on for 30 minutes, and then a contrast ratio in an oblique direction and a color shift in an oblique direction were measured. Table 4 shows the obtained properties together with data of Examples 2 and 3 and Comparative Examples 1 to 4.

[Example 2]

A liquid crystal panel (ii) and a liquid crystal display apparatus (ii) were produced in the same manner as in Example 1 except that: the retardation film C-3 was used as the positive C plate; the retardation film B-1 was used as the first positive A plate; the retardation film A-3 was used as the first negative C plate; and the retardation film A-3 was used as the second negative C plate. Table 4 shows the properties of the liquid crystal display apparatus (ii).

[Example 3]

A liquid crystal panel (iii) and a liquid crystal display apparatus (iii) were produced in the same manner as in Example 1 except that: the retardation film C-1 was used as the positive C plate; the retardation film B-3 was used as the first positive A plate; the retardation film A-1 was used as the first negative C plate; and the retardation film A-1 was used as the second negative C plate. Table 4 shows the properties of the liquid crystal display apparatus (iii).

[Comparative Example 1]

A liquid crystal panel (iv) and a liquid crystal display apparatus (iv) were produced in the same manner as in Example 1 except that the retardation film B-2 used as the first positive Aplate was attached such that its slow axis was substantially parallel (i.e., 0° ± 0.5°) to the long side of the liquid crystal panel [as a result, a slow axis of the first positive A plate (i.e., retardation film B-2) was substantially parallel to an absorption axis of the first polarizer (i.e., polarizer P1)]. The liquid crystal panel (iv) has a structure shown in Fig. **7.** Table 4 shows the properties of the liquid crystal display apparatus (iv).

[Comparative Example 2]

A liquid crystal panel (v) and a liquid crystal display apparatus (v) were produced in the same manner as in Example 1 except that the positive C plate was not used. The liquid crystal panel (v) has a structure shown in Fig. **8.** Table 4 shows the properties of the liquid crystal display apparatus (v).

[Comparative Example 3]

A liquid crystal panel (vi) and a liquid crystal display apparatus (vi) were produced in the same manner as in Example 1 except that the first positive A plate was not used. The liquid crystal panel (vi) has a structure shown in Fig. **9.** Table 4 shows the properties of the liquid crystal display apparatus (vi).

[Comparative Example 4]

A liquid crystal panel (vii) and a liquid crystal display apparatus (vii) were produced in the same manner as in Example 1 except that the second positive A plate was not used. The liquid crystal panel (vii) has a structure shown in Fig. **10.** Table 4 shows the properties of the liquid crystal display apparatus (vii).

[Table 4]

| | First negative C plate | | First positive A plate | | Positive C plate | | Second positive A plate | | Second negative C plate | | Liquid crystal panel | | |
|---|---|---|---|---|---|---|---|---|---|---|---|---|---|
| | Retardation film | Rth[590] (nm) | Retardation film | Re[590] (nm) | Retardation film | Rth[590] (nm) | Retardation film | Re[590] (nm) | Optical film | Rth[590] (nm) | Structure | Contrast ratio in oblique direction | Color shift in oblique direction |
| Example 1 | A-2 | 54 | B-2 | 100 | C-2 | -150 | B-4 | 198 | A-2 | 54 | Fig. 2 | 74.0 | 0.22 |
| Example 2 | A-3 | 80 | B-1 | 82 | C-3 | -210 | B-4 | 198 | A-3 | 80 | Fig. 2 | 38.9 | 0.23 |
| Example 3 | A-1 | 30 | B-3 | 141 | C-1 | -120 | B-4 | 198 | A-1 | 30 | Fig. 2 | 51.0 | 0.15 |
| Comparative Example 1 | A-2 | 54 | B-2 | 100 | C-2 | -150 | B-4 | 198 | A-2 | 54 | Fig. 7 | 4.0 | 0.10 |
| Comparative Example 2 | A-2 | 54 | B-2 | 100 | | | B-4 | 198 | A-2 | 54 | Fig. 8 | 4.0 | 0.21 |
| Comparative Example 3 | A-2 | 54 | | | C-2 | -150 | B-4 | 198 | A-2 | 54 | Fig. 9 | 9.9 | 0.15 |
| Comparative Example 4 | A-2 | 54 | B-2 | 100 | C-2 | -150 | | | A-2 | 54 | Fig. 10 | 3.6 | 0.07 |

[Evaluation]

As shown in each of Examples 1 to 3, the liquid crystal display apparatus provided with the liquid crystal panel of the present invention has a significantly high contrast ratio in an oblique direction and a small color shift in an oblique direction compared with those of a liquid crystal display apparatus employing a conventional liquid crystal panel. The liquid crystal display apparatus of each of Examples 1 to 3 was used for black display in a dark room and visually observed. As a result, light leak was suppressed and slight coloring was reduced even when a screen was seen from any angle. A color image was displayed in a dark room and visually observed, and vivid color display was attained without abnormality even when the screen was seen from any angle. In consideration of the results of Example 1, Re [590] of the first positive A plate is most preferably about 100 nm. In consideration of the results of Examples 1 to 3, the sum ($Rth[590]^{SUM}$) of Rth[590] of the first negative C plate and Rth[590] of the positive C plate is most preferably about -100 nm.

Meanwhile, the liquid crystal panel of Comparative Example 1 arranged the first positive A plate such that its slow axis was parallel to the absorption axis of the first polarizer. However, the arrangement only provided a liquid crystal display apparatus having an improved color shift in an oblique direction but with a low contrast ratio in an oblique direction. Further, the liquid crystal panel of each of Comparative Examples 2, 3, and 4 employs no positive C plate, no first positive A plate, and no second positive A plate, respectively, whereby only a liquid crystal display apparatus having a low contrast ratio in an oblique direction was obtained. Those liquid crystal display apparatuses were used for black display in a dark room and visually observed, and substantial light leak was observed when a screen was seen from an oblique direction. A color image was displayed in a dark room and visually observed. As a result, a display color varied depending on an angle from which the observer saw the display, and indicated clear abnormality.

Industrial Applicability

As described above, the liquid crystal panel of the present invention has an increased contrast ratio in an oblique direction and a reduced color shift in an oblique direction of the liquid crystal display apparatus, and thus is extremely useful for improving display properties of the liquid crystal display apparatus. The liquid crystal panel of the present invention is particularly suitable for a wide-screen color television.

## Claims

**1.** A liquid crystal panel (100; 101; 102; 103; 104), comprising:

a liquid crystal cell (10) including a liquid crystal layer (12) containing nematic liquid crystals in homogeneous alignment in the absence of an electric field;
a first polarizer (20) arranged on a viewer side of the liquid crystal cell (10);
a first laminated optical element (30) arranged between the liquid crystal cell (10) and the first polarizer (20);
a second polarizer (40) arranged on a backlight side of the liquid crystal cell (10); and
a second laminated optical element (50) arranged between the liquid crystal cell (10) and the second polarizer (40), wherein:

the first laminated optical element (30) comprises a first negative C plate (31) and a first positive A plate (32), arranged in the stated order from the vicinity of the first polarizer (20), the first positive A plate (32) being arranged such that the slow axis of the first positive A plate is substantially perpendicular to the absorption axis of the first polarizer (20); and
the second laminated optical element (50) comprises a second negative C plate (51) and a second positive A plate (52) arranged in the stated order from the vicinity of the second polarizer (40), the second positive A plate (52) being arranged such that the slow axis of the second positive A plate (52) is substantially parallel to an alignment direction of the liquid crystal cell (10), **charaterized in that** the first laminated optical element (30) further comprises a positive C plate (33) arranged on the liquid crystal cell (10) side of said first positive A plate (32) of the first laminated optical element (30).

**2.** A liquid crystal panel (100; 101; 102; 103; 104) according to claim 1, wherein the liquid crystal cell (10) has an in plane retardation value (Re[590]) of 250 nm to 480 nm at a measuring wavelength of 590 nm.

**3.** A liquid crystal panel (100; 101; 102; 103; 104) according to claim 1 or 2, wherein the first negative C plate (31) has a thickness direction retardation value (Rth[590]) of 30 nm to 200 nm at a measuring wavelength of 590 nm.

4. A liquid crystal panel (100; 101; 102; 103; 104) according to any one of claims 1 to 3, wherein the first negative C plate (31) comprises a polymer film (301) containing as a main component at least one thermoplastic resin selected from the group consisting of a cellulose-based resin, a polyamideimide-based resin, a polyetheretherketone-based resin, and a polyimide-based resin.

5. A liquid crystal panel (100; 101; 102; 103; 104) according to any one of claims 1 to 4, wherein the first positive A plate (32) has an in plane retardation value (Re[590]) of 50 nm to 200 nm at a measuring wavelength of 590 nm.

6. A liquid crystal panel (100; 101; 102; 103; 104) according to any one of claims 1 to 5, wherein the first positive A plate (32) comprises a stretched film of a polymer film (301) containing a cycloolefin-based resin.

7. A liquid crystal panel (100; 101; 102; 103; 104) according to any one of claims 1 to 6, wherein the positive C plate (33) has a thickness direction retardation value (Rth[590]) of -60 nm or less at a measuring wavelength of 590 nm.

8. A liquid crystal panel (100; 101; 102; 103; 104) according to any one of claims 1 to 7, wherein the positive C plate (33) comprises a solidified layer or cured layer of a liquid crystal composition containing a calamitic liquid crystal compound in homeotropic alignment.

9. A liquid crystal panel (100; 101; 102; 103; 104) according to any one of claims 1 to 8, wherein a sum of an in plane retardation value (Re[590]) at a measuring wavelength of 590 nm of the second positive A plate (52) and an in plane retardation value (Re [590]) at a measuring wavelength of 590 nm of the liquid crystal cell (10) is 500 nm to 650 nm.

10. A liquid crystal panel (100; 101; 102; 103; 104) according to any one of claims 1 to 9, wherein a thickness direction retardation value (Rth[590]) at a measuring wavelength of 590 nm of the second negative C plate (51) is substantially equal to a thickness direction retardation value (Rth[590]) at a measuring wavelength of 590 nm of the first negative C plate (31).

11. A liquid crystal television, comprising the liquid crystal panel (100; 101; 102; 103; 104) according to any one of claims 1 to 10.

12. A liquid crystal display apparatus (200), comprising the liquid crystal panel (100; 101; 102; 103; 104) according to any one of claims 1 to 10.

## Patentansprüche

1. Flüssigkristallpanel (100;101;102;103;104), bestehend aus:

einer Flüssigkristallzelle (10), die eine Flüssigkristallschicht (12) einschließt, die nematische Flüssigkristalle in homogener Ausrichtung bei Abwesenheit eines elektrischen Felds enthält;
einem ersten Polarisator (20), der auf einer Betrachterseite der Flüssigkristallzelle (10) angeordnet ist;
einem ersten laminierten optischen Element (30), das zwischen der Flüssigkristallzelle (10) und dem ersten Polarisator (20) angeordnet ist;
einem zweiten Polarisator (40), der auf einer Seite der Hintergrundbeleuchtung der Flüssigkristallzelle (10) angeordnet ist, und
einem zweiten laminierten optischen Element (50), das zwischen der Flüssigkristallzelle (10) und dem zweiten Polarisator (40) angeordnet ist; wobei:

das erste laminierte optische Element (30) eine erste negative C-Platte (31) und eine erste positive A-Platte (32) aufweist, die in der beschriebenen Reihenfolge von der Nachbarschaft des ersten Polarisators (20) angeordnet sind, wobei die erste positive A-Platte (32) derart angeordnet ist, dass die langsame Achse (Slow Axis) der ersten positiven A-Platte im Wesentlichen senkrecht zur Absorptionsachse des ersten Polarisators (20) ist, und
das zweite laminierte optische Element (50) eine zweite negative C-Platte (51) und eine zweite positive A-Platte (52) aufweist, die in der beschriebenen Reihenfolge von der Nachbarschaft des zweiten Polarisators (40) angeordnet sind, wobei die zweite positive A-Platte (52) derart angeordnet ist, dass die langsame Achse (Slow Axis) der zweiten positiven A-Platte (52) im Wesentlichen parallel zu einer Ausrichtungsrichtung der Flüssigkristallzelle (10) ist,

**dadurch gekennzeichnet, dass** das erste laminierte optische Element (30) weiterhin eine positive C-Platte (33) aufweist, die auf der Seite der Flüssigkristallzelle (10) der ersten positiven A-Platte (32) des ersten laminierten optischen Elements (30) angeordnet ist.

2. Flüssigkristallpanel (100;101;102;103;104) gemäß Patentanspruch 1, worin die Flüssigkristallzelle (10) einen Retardationswert in der Ebene (Re[590]) von 250 nm bis 480 nm bei einer Mess-Wellenlänge von 590 nm hat.

3. Flüssigkristallpanel (100;101;102;103;104) gemäß Patentanspruch 1 oder 2, wobei die erste negative C-Platte (31) einen Retardationswert in der Dickenrichtung (Rth [590]) von 30 nm bis 200 nm bei einer Mess-Wellenlänge von 590 nm hat.

4. Flüssigkristallpanel (100;101;102;103;104) gemäß einem der Patentansprüche 1 bis 3, wobei die erste negative C-Platte (31) einen Polymerfilm (301) aufweist, der als eine Hauptkomponente mindestens ein thermoplastisches Harz enthält, das aus der Gruppe ausgesucht ist, die aus einem auf Zellulose basierenden Harz, einem auf Polyamidimide basierenden Harz, einem auf Polyetheretherketone basierenden Harz und einem auf Polyimide basierenden Harz besteht.

5. Flüssigkristallpanel (100;101;102;103;104) gemäß einem der Patentansprüche 1 bis 4, wobei die erste positive A-Platte (32) einen Retardationswert in der Ebene (Re [590]) von 50 nm bis 200 nm bei einer Mess-Wellenlänge von 590 nm hat.

6. Flüssigkristallpanel (100;101;102;103;104) gemäß einem der Patentansprüche 1 bis 5, wobei die erste positive A-Platte (32) eine gereckte Folie eines Polymerfilms (301) aufweist, der ein auf Cycloolefin basierendes Harz enthält.

7. Flüssigkristallpanel (100;101;102;103;104) gemäß einem der Patentansprüche 1 bis 6, worin die positive C-Platte (33) in Dickenrichtung einen Retardationswert (Rth [590]) von -60 nm oder weniger bei einer Mess-Wellenlänge von 590 nm hat.

8. Flüssigkristallpanel (100;101;102;103;104) gemäß einem der Patentansprüche 1 bis 7, wobei die positive C-Platte (33) eine erstarrte Schicht oder ausgehärtete Schicht einer Flüssigkristallzusammensetzung aufweist, die ein kalamitisches Flüssigkristallgemisch in homöotroper Ausrichtung enthält.

9. Flüssigkristallpanel (100;101;102;103;104) gemäß einem der Patentansprüche 1 bis 8, wobei eine Summe eines Retardationswerts in der Ebene (Re [590]) bei einer Mess-Wellenlänge von 590 nm der zweiten positiven A-Platte (52) und eines Retardationswerts in der Ebene (Re[590]) bei einer Mess-Wellenlänge von 590 nm der Flüssigkristallzelle (10) 500 nm bis 650 nm beträgt.

10. Flüssigkristallpanel (100;101;102;103;104) gemäß einem der Patentansprüche 1 bis 9, wobei ein Retardationswert in Dickenrichtung (Rth [590]) bei einer Mess-Wellenlänge von 590 nm der zweiten negativen C-Platte (51) im Wesentlichen gleich einem Retardationswert in Dickenrichtung (Rth [590]) bei einer Mess-Wellenlänge von 590 nm der ersten negativen C-Platte (31) ist.

11. Flüssigkristall-Fernseher, der das Flüssigkristallpanel (100; 101; 102; 103; 104) gemäß einem der Patentansprüche 1 bis 10 aufweist.

12. Flüssigkristall-Anzeigegerät (200), das das Flüssigkristallpanel (100;101;102;103;104) gemäß einem der Patentansprüche 1 bis 10 aufweist.

## Revendications

1. Panneau à cristaux liquides (100 ; 101 ; 102 ; 103 ; 104) comprenant :

une cellule à cristaux liquides (10) comprenant une couche à cristaux liquides (12) contenant des cristaux liquides nématiques alignés de manière homogène en l'absence d'un champ électrique ;
un premier polariseur (20) disposé sur un côté orienté utilisateur de la cellule à cristaux liquides (10) ;
un premier élément optique en couches (30) disposé entre la cellule à cristaux liquides (10) et le premier polariseur (20);

un second polariseur (40) disposé sur un côté rétroéclairage de la cellule à cristaux liquides (10) ; et
un second élément optique en couches (50) disposé entre la cellule à cristaux liquides (10) et le second polariseur (40), dans lequel :

le premier élément optique en couches (30) comprend une première plaque négative C (31) et une première plaque positive A (32) disposées dans l'ordre indiqué à proximité du premier polariseur (20), la première plaque positive A (32) étant disposée de manière que l'axe lent de la première plaque positive A soit sensiblement perpendiculaire à l'axe d'absorption du premier polariseur (20) ; et
le second élément optique en couches (50) comprend une seconde plaque négative C (51) et une seconde plaque positive A (52) disposées dans l'ordre indiqué à proximité du second polariseur (40), la seconde plaque positive A (52) étant disposée de manière que l'axe lent de la seconde plaque positive A (52) soit sensiblement parallèle à une direction d'alignement de la cellule à cristaux liquides (10), **caractérisée en ce que** le premier élément optique en couches (30) comprend en outre une plaque positive C (33) disposée sur le côté de la cellule à cristaux liquides (10) de la première plaque positive A précitée (32) du premier élément optique en couches (30).

**2.** Panneau à cristaux liquides (100 ; 101 ; 102 ; 103 ; 104) selon la Revendication 1, dans lequel la cellule à cristaux liquides (10) a une valeur de retard dans le plan (Re [590]) de 250 nm à 480 nm pour une longueur d'onde de mesure de 590 nm.

**3.** Panneau à cristaux liquides (100 ; 101 ; 102 ; 103 ; 104) selon la Revendication 1 ou 2, dans lequel la première plaque négative C (31) a une valeur de retard de direction d'épaisseur (Rth [590]) de 30 nm à 200 nm pour une longueur d'onde de mesure de 590 nm.

**4.** Panneau à cristaux liquides (100 ; 101 ; 102 ; 103 ; 104) selon l'une quelconque des Revendications 1 à 3, dans lequel la première plaque négative C (31) comprend un film polymère (301) contenant comme composant principal au moins une résine thermoplastique choisie dans le groupe comprenant une résine à base de cellulose, une résine à base de polyamidéimide, une résine à base d'éthercétone de polyéther et une résine à base de polyimide.

**5.** Panneau à cristaux liquides (100; 101 ; 102 ; 103 ; 104) selon l'une quelconque des Revendications 1 à 4, dans lequel la première plaque positive A (32) a une valeur de retard dans le plan (Re [590]) de 50 nm à 200 nm pour une longueur d'onde de mesure de 590 nm.

**6.** Panneau à cristaux liquides (100 ; 101 ; 102 ; 103 ; 104) selon l'une quelconque des Revendications 1 à 5, dans lequel la première plaque positive A (32) comprend un film étiré en film polymère (301) contenant une résine à base de cyclo-oléfine.

**7.** Panneau à cristaux liquides (100 ; 101 ; 102 ; 103 ; 104) selon l'une quelconque des Revendications 1 à 6, dans lequel la plaque positive C (33) a une valeur de retard de direction d'épaisseur (Rth [590]) de -60 nm ou moins pour une longueur d'onde de mesure de 590 nm.

**8.** Panneau à cristaux liquides (100 ; 101 ; 102 ; 103 ; 104) selon l'une quelconque des Revendications 1 à 7, dans lequel la plaque positive C (33) comprend une couche solidifiée ou une couche durcie d'une composition à cristaux liquides contenant un composé de cristaux liquides calamitiques dans un alignement homéotrope.

**9.** Panneau à cristaux liquides (100 ; 101 ; 102 ; 103 ; 104) selon l'une quelconque des Revendications 1 à 8, dans lequel une somme d'une valeur de retard dans le plan (Re [590]) pour une longueur d'onde de mesure de 590 nm de la seconde plaque positive A (52) et une valeur de retard dans le plan (Re [590]) pour une longueur d'onde de mesure de 590 nm de la cellule à cristaux liquides (10) est comprise entre 500 nm et 650 nm.

**10.** Panneau à cristaux liquides (100 ; 101 ; 102 ; 103 ; 104) selon l'une quelconque des Revendications 1 à 9, dans lequel une valeur de retard de direction d'épaisseur (Rth [590]) pour une longueur d'onde de mesure de 590 nm de la seconde plaque négative C (51) est sensiblement égale à une valeur de retard de direction d'épaisseur (Rth [590]) pour une longueur d'onde de mesure de 590 nm de la première plaque négative C (31).

**11.** Télévision à cristaux liquides, comprenant le panneau à cristaux liquides (100 ; 101 ; 102 ; 103 ; 104) selon l'une quelconque des Revendications 1 à 10.

**12.** Appareil d'affichage à cristaux liquides (200), comprenant le panneau à cristaux liquides (100 ; 101;102 ; 103 ; 104) selon l'une quelconque des Revendications 1 à 10.

Fig. 1

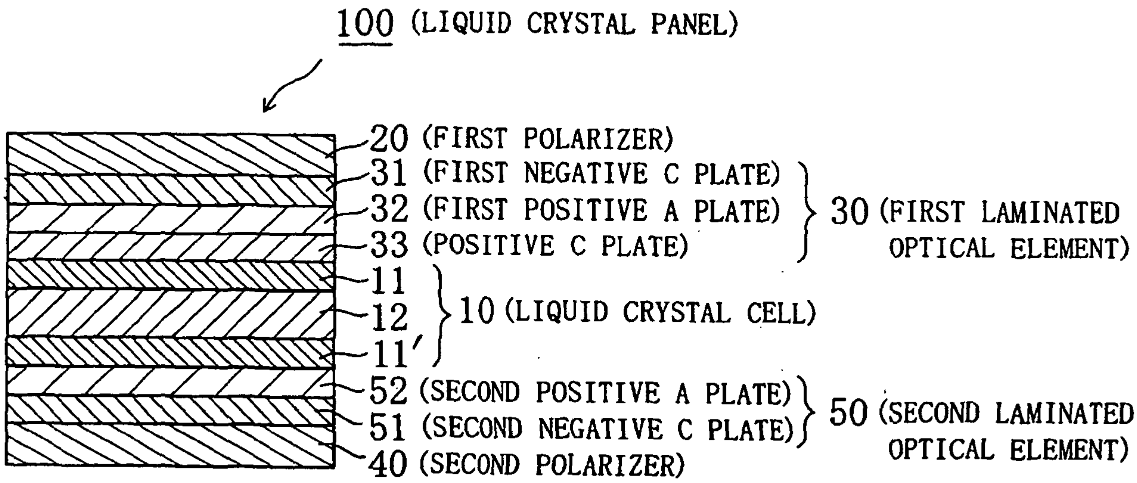
100 (LIQUID CRYSTAL PANEL)
20 (FIRST POLARIZER)
31 (FIRST NEGATIVE C PLATE)
32 (FIRST POSITIVE A PLATE)
33 (POSITIVE C PLATE)
30 (FIRST LAMINATED OPTICAL ELEMENT)
11
12
11′
10 (LIQUID CRYSTAL CELL)
52 (SECOND POSITIVE A PLATE)
51 (SECOND NEGATIVE C PLATE)
40 (SECOND POLARIZER)
50 (SECOND LAMINATED OPTICAL ELEMENT)

Fig. 2

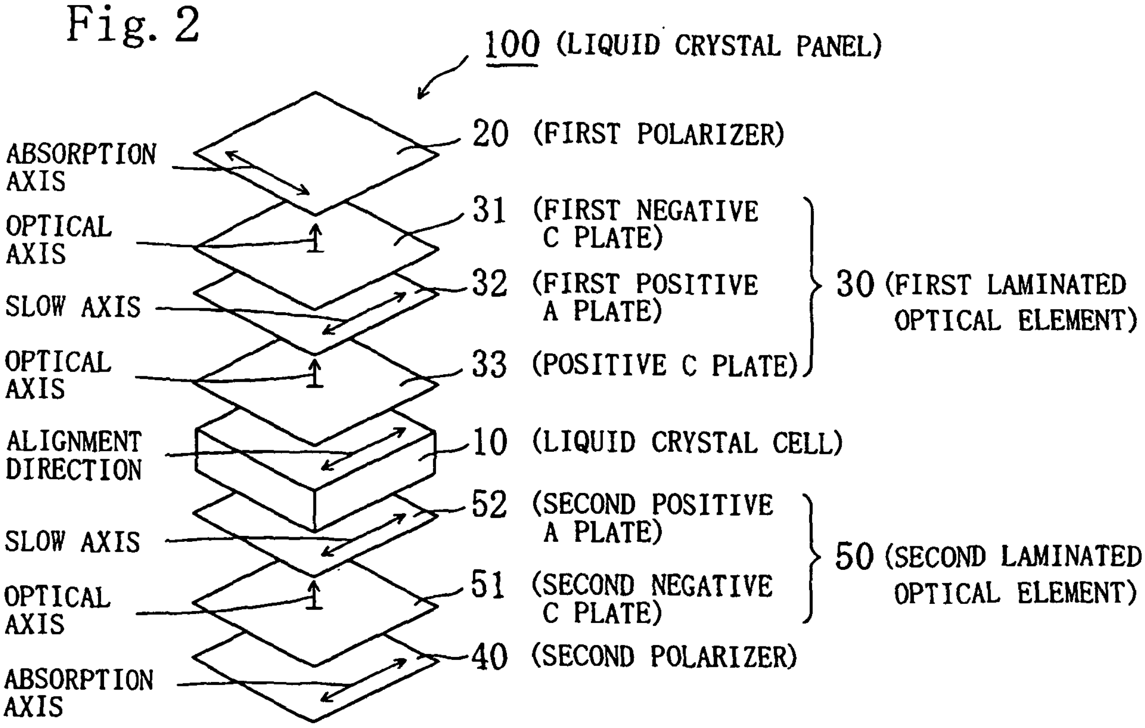
100 (LIQUID CRYSTAL PANEL)
ABSORPTION AXIS
OPTICAL AXIS
SLOW AXIS
OPTICAL AXIS
ALIGNMENT DIRECTION
SLOW AXIS
OPTICAL AXIS
ABSORPTION AXIS
20 (FIRST POLARIZER)
31 (FIRST NEGATIVE C PLATE)
32 (FIRST POSITIVE A PLATE)
33 (POSITIVE C PLATE)
30 (FIRST LAMINATED OPTICAL ELEMENT)
10 (LIQUID CRYSTAL CELL)
52 (SECOND POSITIVE A PLATE)
51 (SECOND NEGATIVE C PLATE)
50 (SECOND LAMINATED OPTICAL ELEMENT)
40 (SECOND POLARIZER)

Fig.3

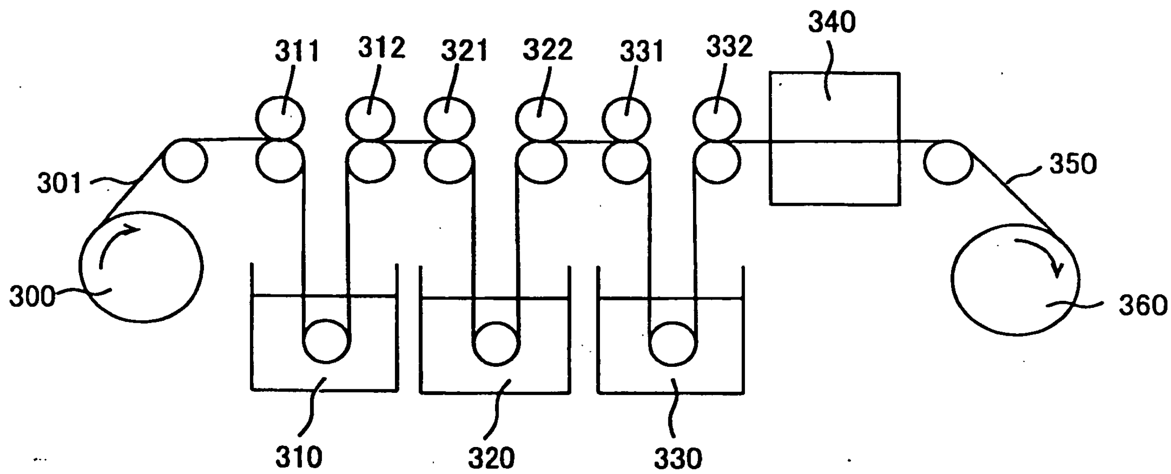

Fig.4(a)

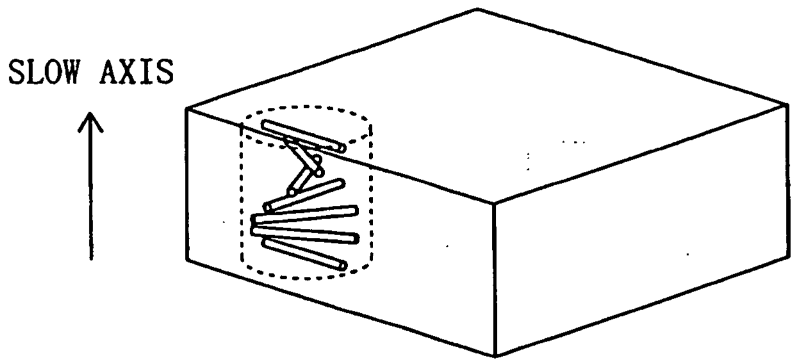


Fig.4(b)

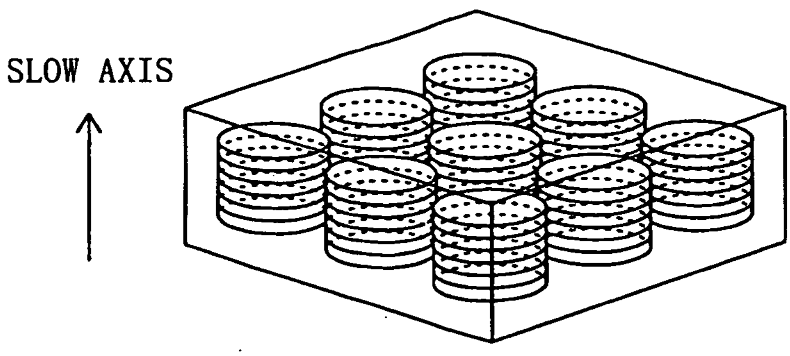

Fig.5

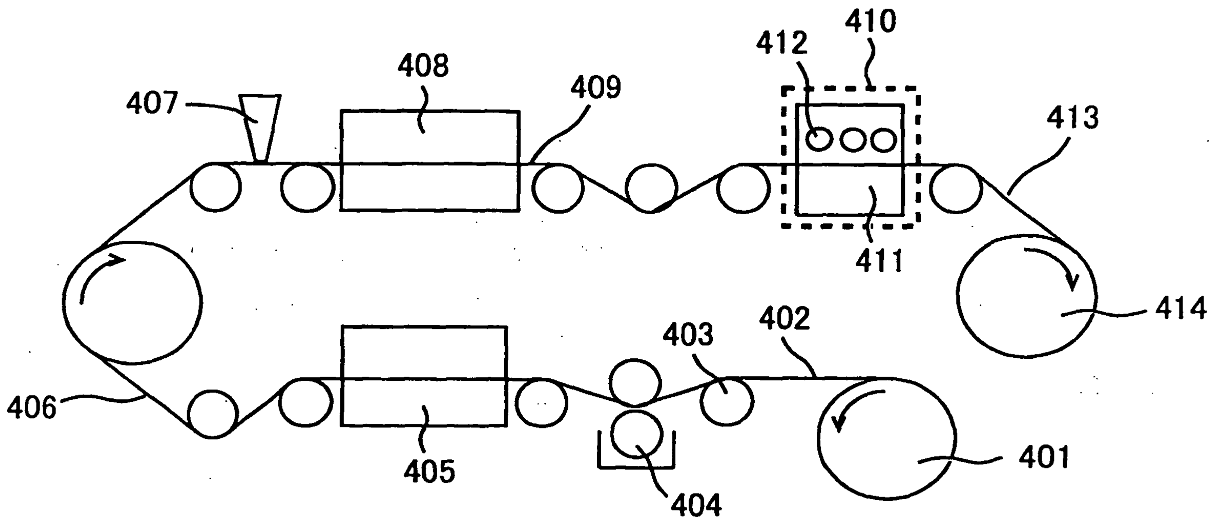

Fig. 6

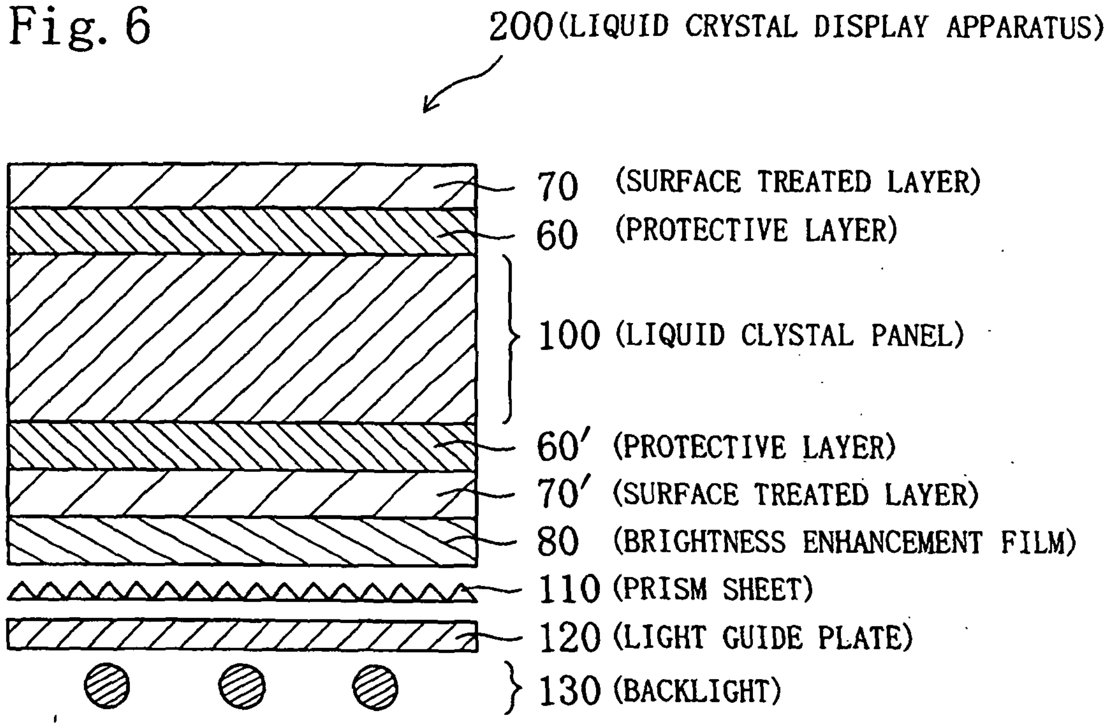
200 (LIQUID CRYSTAL DISPLAY APPARATUS)
70 (SURFACE TREATED LAYER)
60 (PROTECTIVE LAYER)
100 (LIQUID CLYSTAL PANEL)
60′ (PROTECTIVE LAYER)
70′ (SURFACE TREATED LAYER)
80 (BRIGHTNESS ENHANCEMENT FILM)
110 (PRISM SHEET)
120 (LIGHT GUIDE PLATE)
130 (BACKLIGHT)

Fig. 7

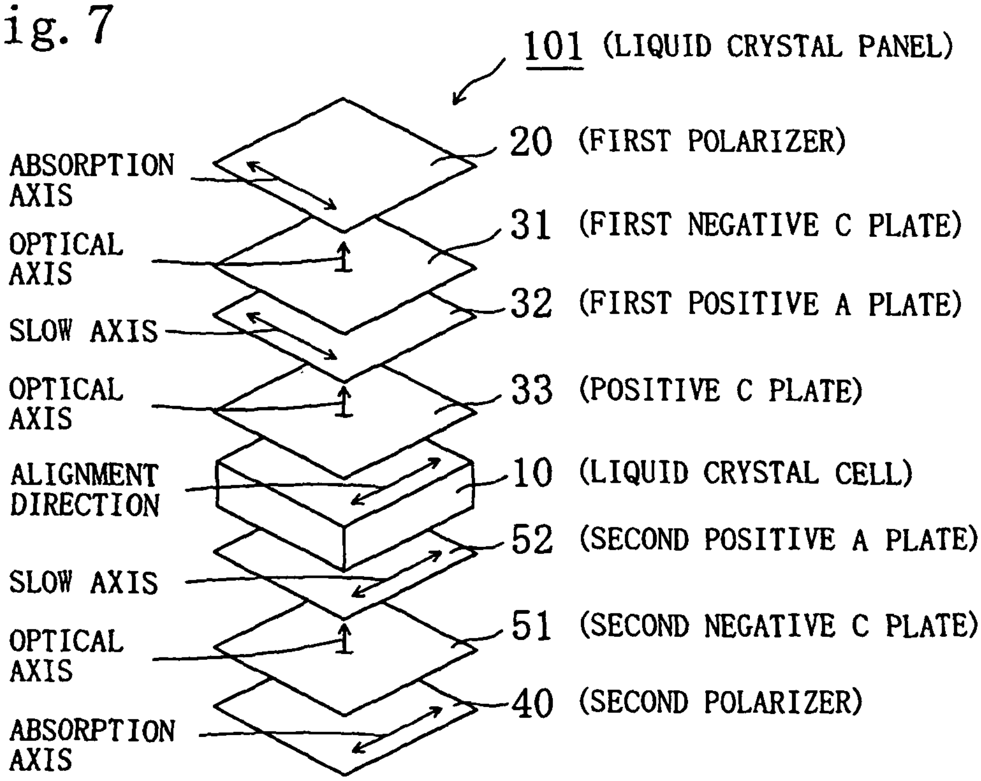
101 (LIQUID CRYSTAL PANEL)
ABSORPTION AXIS
OPTICAL AXIS
SLOW AXIS
OPTICAL AXIS
ALIGNMENT DIRECTION
SLOW AXIS
OPTICAL AXIS
ABSORPTION AXIS
20 (FIRST POLARIZER)
31 (FIRST NEGATIVE C PLATE)
32 (FIRST POSITIVE A PLATE)
33 (POSITIVE C PLATE)
10 (LIQUID CRYSTAL CELL)
52 (SECOND POSITIVE A PLATE)
51 (SECOND NEGATIVE C PLATE)
40 (SECOND POLARIZER)

Fig. 8

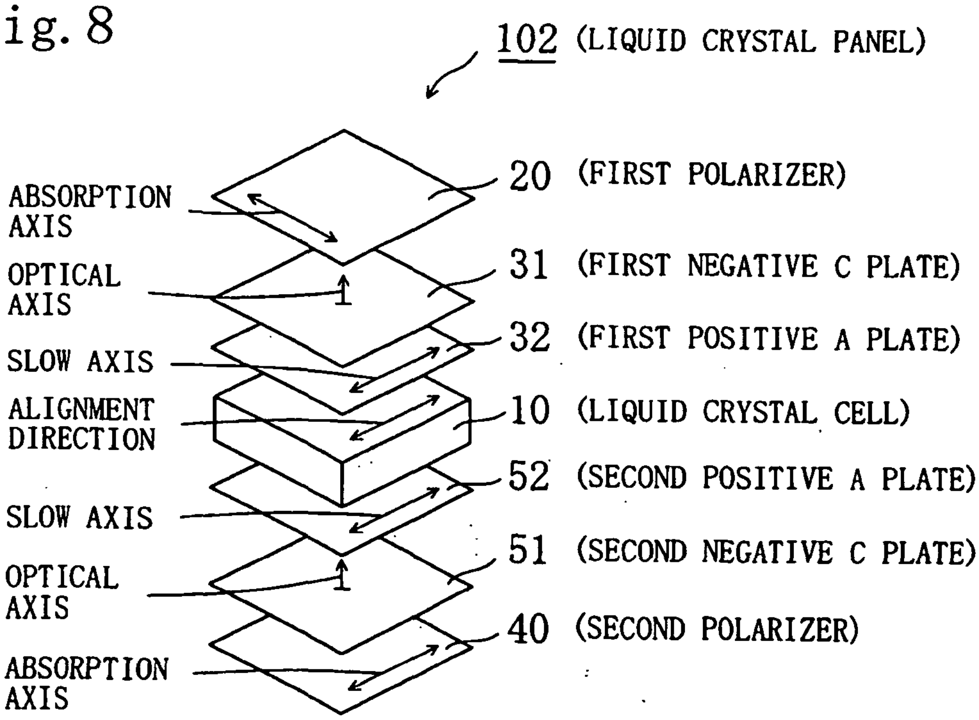
102 (LIQUID CRYSTAL PANEL)
ABSORPTION AXIS
OPTICAL AXIS
SLOW AXIS
ALIGNMENT DIRECTION
SLOW AXIS
OPTICAL AXIS
ABSORPTION AXIS
20 (FIRST POLARIZER)
31 (FIRST NEGATIVE C PLATE)
32 (FIRST POSITIVE A PLATE)
10 (LIQUID CRYSTAL CELL)
52 (SECOND POSITIVE A PLATE)
51 (SECOND NEGATIVE C PLATE)
40 (SECOND POLARIZER)

Fig. 9

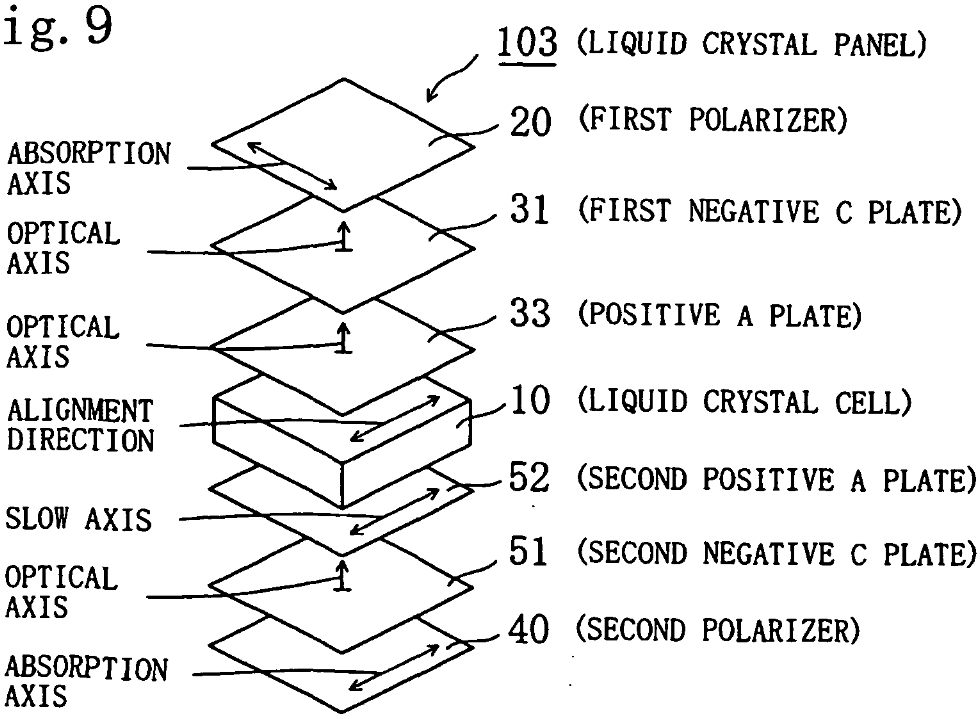
103 (LIQUID CRYSTAL PANEL)
ABSORPTION AXIS
OPTICAL AXIS
OPTICAL AXIS
ALIGNMENT DIRECTION
SLOW AXIS
OPTICAL AXIS
ABSORPTION AXIS
20 (FIRST POLARIZER)
31 (FIRST NEGATIVE C PLATE)
33 (POSITIVE A PLATE)
10 (LIQUID CRYSTAL CELL)
52 (SECOND POSITIVE A PLATE)
51 (SECOND NEGATIVE C PLATE)
40 (SECOND POLARIZER)

Fig. 10

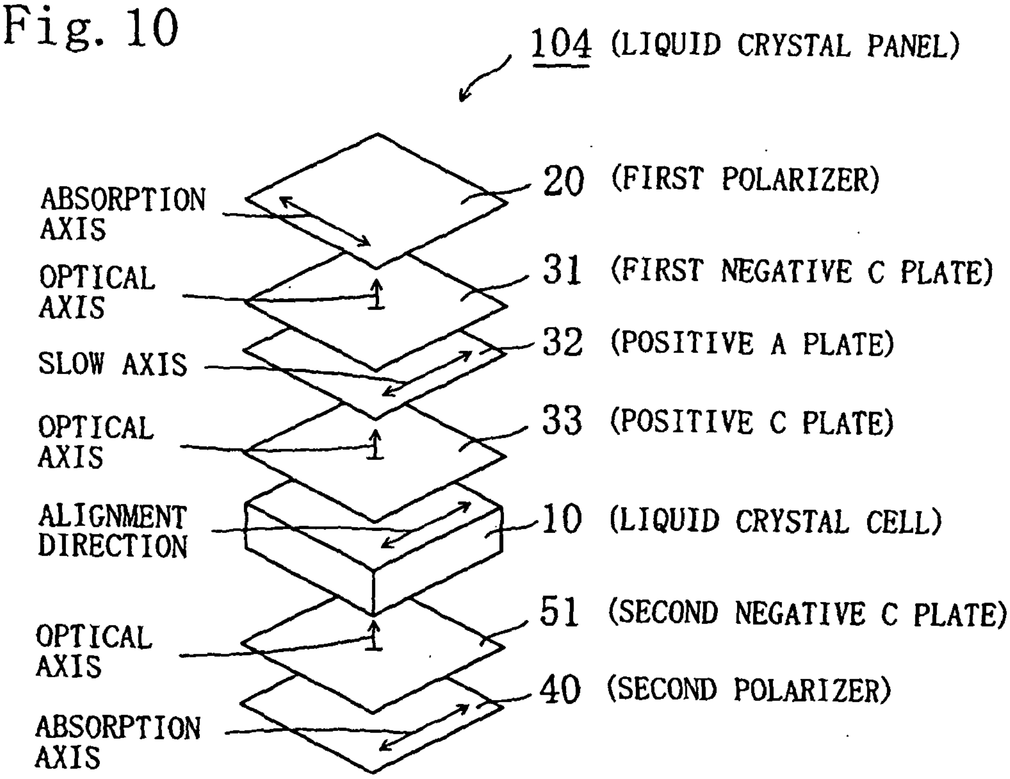
104 (LIQUID CRYSTAL PANEL)
ABSORPTION AXIS
20 (FIRST POLARIZER)
OPTICAL AXIS
31 (FIRST NEGATIVE C PLATE)
SLOW AXIS
32 (POSITIVE A PLATE)
OPTICAL AXIS
33 (POSITIVE C PLATE)
ALIGNMENT DIRECTION
10 (LIQUID CRYSTAL CELL)
OPTICAL AXIS
51 (SECOND NEGATIVE C PLATE)
ABSORPTION AXIS
40 (SECOND POLARIZER)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11133408 A
- WO 0120393 A1
- JP 2002031812 A
- US 5523863 A
- US 6049428 A
- JP 2000315144 A
- JP 2001188128 A
- JP 2003287750 A
- JP 2003287623 A
- JP 9117983 A
- JP 2005008698 A
- JP 2003262721 A
- JP 2002062427 A


### Non-patent literature cited in the description


- Optical Polymer Zairyo No Kaihatsu/Ouyougijutsu. NTS Inc, 2003, vol. 111, 103